(19) **Europäisches Patentamt European Patent Office Office européen des brevets**

(11) **EP 4 751 904 A1**

(12) **EUROPEAN PATENT APPLICATION**
published in accordance with Art. 153(4) EPC

(43) Date of publication:
**03.06.2026 Bulletin 2026/23**

(21) Application number: **24864999.8**

(22) Date of filing: **24.05.2024**

(51) International Patent Classification (IPC):
*B32B 5/24* (2006.01)     *B32B 1/08* (2006.01)
*B32B 27/32* (2006.01)     *D04H 1/4382* (2012.01)
*F16L 9/12* (2006.01)     *F16L 9/19* (2006.01)
*F16L 59/14* (2006.01)     *F24F 13/22* (2006.01)

(52) Cooperative Patent Classification (CPC):
**B32B 1/08; B32B 5/24; B32B 27/32; D04H 1/4382;
F16L 9/12; F16L 9/19; F16L 59/14; F24F 13/22**

(86) International application number:
**PCT/JP2024/019196**

(87) International publication number:
**WO 2025/057491 (20.03.2025 Gazette 2025/12)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **11.09.2023 JP 2023147218**

(71) Applicant: **FURUKAWA ELECTRIC CO., LTD.
Chiyoda-ku, Tokyo 100-8322 (JP)**

(72) Inventors:
• **KOZAWA, Eiji**
  **Tokyo 100-8322 (JP)**
• **KAWAI, Koichi**
  **Tokyo 100-8322 (JP)**
• **UNNO, Taro**
  **Tokyo 100-8322 (JP)**
• **MITSUMOTO, Masaki**
  **Tokyo 100-8322 (JP)**
• **YAMAMOTO, Syunji**
  **Tokyo 100-8322 (JP)**
• **TAKEUCHI, Tsuyoshi**
  **Tokyo 100-8322 (JP)**

(74) Representative: **Goddar, Heinz J.
Boehmert & Boehmert
Anwaltspartnerschaft mbB
Pettenkoferstrasse 22
80336 München (DE)**

(54) **HEAT INSULATION COVER MEMBER FOR DRIP PREVENTION OR DRIP SUPPRESSION OF DEW CONDENSATION WATER, COVERING MEMBER FOR OTHER HEAT EXCHANGE PIPES AND DUCTS, PIPING STRUCTURE AND DUCT COVERING STRUCTURE USING SAME, ELECTRICAL DEVICE BOX COVERING STRUCTURE, NONWOVEN FABRIC TO BE USED IN SAID HEAT INSULATION COVER MEMBER AND METHOD FOR USING SAID NONWOVEN FABRIC IN HEAT INSULATION COVER MEMBER, AND METHOD FOR USING SAID HEAT INSULATION COVER MEMBER FOR VARIOUS COVERING MEMBERS INCLUDING HEAT EXCHANGE PIPE COVERING MEMBER**

(57) Provided is a heat insulation cover member for drip prevention or drip suppression of dew condensation water in which a nonwoven fabric is disposed on the surface of a resin foam. The heat insulation cover member for drip prevention or drip suppression of dew condensation water, in which the nonwoven fabric is joined to the surface of the resin foam, is characterized in that: the resin foam is a polyethylene resin foam that has closed cells; the nonwoven fabric is affixed to on surface of the resin foam by fusion or bonding; the nonwoven fabric is composed of a nonwoven fabric in which a specific amount of highly water absorbent resin fibers is mixed with thermoplastic resin fibers; at least some of the thermoplastic resin fibers are fused or bonded with each other; and the highly water absorbent resin fibers are contained in an amount of 10% by mass to 80% by mass inclusive, while the thermoplastic resin fibers are contained in an amount of 20% by mass to 90% by mass inclusive. The invention of a covering member for other heat exchange pipes and ducts, a piping structure and a duct covering structure using the same, an electrical device box covering structure, and a method for using

EP 4 751 904 A1

a nonwoven fabric and a heat insulation cover member is also included.

Fig.4

**Description**

TECHNICAL FIELD

The present invention relates to a heat insulation cover member for drip prevention or drip suppression of dew condensation water, a covering member for other heat exchange pipes and ducts, a piping structure and a duct covering structure using the same, an electrical device box covering structure, a nonwoven fabric to be used in the heat insulation cover member and a method for using the nonwoven fabric in the heat insulation cover member, and a method for using the heat insulation cover member for various covering members including a heat exchange pipe covering member.

BACKGROUND OF THE INVENTION

Due to extreme heat in recent years and increase in efficiency of air conditioning, problems caused by dripping of dew condensation water occurring inside concealed refrigerant pipes have surfaced. Such problems include peeling and blackening of ceiling wall paper and floors caused by dripping of dew condensation water. As a covering member for such a heat exchange pipe, a material made by laminating a polyethylene or polypropylene film to at least one surface of a polyethylene foam and embossing the surface of the laminated resin foam has been used as a heat insulation cover member for refrigerant pipes etc. of air conditioning equipment. However, in a case of such the heat insulation cove member, condensation occurs on a surface of the heat insulation cover member used around an outer periphery of the refrigerant pipe. Such dew condensation water drips down into piping space in an attic or the like, causing mold to grow inside the piping space in the attic. Although purposes and uses of measures vary, the following inventions can be cited as references for technologies for cover members and nonwoven fabrics.

Patent Document 1 has disclosed the followings. A covering body accommodating a covering material having a desired thickness covers a covering layer around a metal-made duct body, a flexible pipe made of synthetic resin, a flexible pipe made of aluminum, or a duct body or a flexible pipe having a surrounding covering layer. A highly water absorbent polymer material is permeated into the heat/cold insulation covering material that is capable of preventing or suppressing condensation, such as glass cloth, nonwoven wool, or cotton-like pulp, of the desired thickness accommodated in the covering body. In other words, a pipe structure of a duct or the like includes the heat/cold insulation covering layer that is capable of preventing or suppressing condensation by improving a water retention rate and eliminating condensation. Conversely, to satisfy heat/cold insulation function without forming a foam layer, the pipe structure of Patent Document 1 is required to ensure insulation function of the heat/cold insulation covering layer, and this can be seen from the fact that the glass cloth, nonwoven wool, or cotton-like pulp with the permeated polymer water absorbent material is wrapped around in a thickness that is different from the present invention.

The structure of Patent Document 1 is a pipe structure in which a surface covering layer, which is made by permeating a highly fire-resistant material such as fluorine resin or zirconium to improve fire resistance into the heat/cold insulation covering layer such as the glass cloth, nonwoven wool, or cotton-like pulp, or the like that is capable of preventing or suppressing condensation, covers the heat/cold insulation covering layer. In the pipe structure of Patent Document 1, a nonwoven fabric permeated with the polymer water absorbent material is used to cover the surface of the structure. Unlike the present invention, the nonwoven fabric is not laminated onto a surface of a polyethylene-based resin foam, nor highly water absorbent resin fibers are not used as in the present invention. Thus, the two differ in the structure of the covering material as well as whether or not a resin foam is required, and also technical concepts differ in whether or not the resin foam is used in the insulation layer. In other words, Patent Document 1 needs to achieve insulation performance by using only a fiber material such as the nonwoven fabric without using the resin foam. In addition to the above, there is no mention of preventing dew condensation water from coagulating in a specific location and promoting transpiration of water by diffusion, such as water retention parameters of the nonwoven fabric.

Patent Document 2 has disclosed a heat-insulating pipe cover, which is a sheet made by laminating an outer skin made of synthetic resin on a surface of a rectangular thermoplastic resin foam. On one end of the foam sheet, the outer skin of the laminated sheet is provided protruding from the end of the foam sheet forming an overlapped portion. The overlapped portion has a laminate structure via a release sheet, which allows adhesion with an adhesive layer applied to the outer skin, and the adhesive layer is partly covered with a protection layer.

Here, the invention of Patent Document 2 aims to provide the heat-insulating pipe cover, a covering method using the same, and a heat-insulating pipe covering structure, wherein the heat-insulating pipe cover has a structure that facilitates, through synergistic effect of the protection layer and the release sheet, operation of installing the heat-insulating pipe cover to pipes even when wearing work gloves as well as remarkably improves thermal deterioration of cut areas after the installation.

The purpose of the heat-insulating pipe cover of Patent Document 2 is to simplify installation of the heat-insulating pipe cover and to improve heat resistance, and is not to prevent or suppress dripping of dew condensation water. Thus, the detailed description of the invention in the specification only discloses a thermoplastic resin film or thermoplastic resin sheet as the protection layer, and there is no mention of nonwoven fabrics at all.

That is, although a nonwoven fabric is mentioned in a claim as an example of a material that may be usable as the protection layer or the release sheet, Patent Document 2 treats non-water absorbent thermoplastic resin sheets and resin films in the same way as the water absorbent materials such as paper, woven or knitted fabrics, and nonwoven fabrics. Since any material may be used as long as the material can be used as a surface covering material to form the protection layer, there is no description regarding structures of nonwoven fabrics and characteristics of the material.

Although the invention of Patent Document 2 discloses the heat insulation pipe cover using a resin foam, its purpose is to simplify the installation and to prevent thermal deterioration of the cut area (the joined portion at the ends) of the foam, and the invention is not a heat insulation cover aimed for prevention or suppression of dripping of dew condensation water by laminating a nonwoven fabric made of a mixture of synthetic fibers and highly water absorbent resin fibers onto a surface of a foam. Furthermore, no specific structure is disclosed for the nonwoven fabric, which is treated in the same way as the resin film as the surface cover material for the protection layer, and the invention does not intend to provide special functions to the nonwoven fabric taking into considerations the structure or material properties of the nonwoven fabric. Thus, Patent Document 2 has not disclosed at all how to balance the water retention property and diffusive evaporation property of the nonwoven fabric by using water retention parameters of the nonwoven fabric for preventing dew condensation water from coagulating and promoting transpiration of water by diffusion, and has no such motivation.

Patent Document 3 has disclosed the following invention. Various films and nonwoven fabrics are combined together and heat insulation effects and water absorbent performance of a heat insulation cover member were studied. As a result, it was found that, when a polyolefin porous film and a nonwoven fabric containing highly water absorbent polymer are laminated, and water droplets were dripped onto the film surface to be dripped through the holes in the porous film, a speed of absorbing dew condensation water was within 60 seconds. A water absorbent heat insulation cover member for agricultural use having such characteristics is disclosed.

The water absorbent heat insulation cover member for agricultural use of Patent Document 3 is primarily intended to be laid between strawberries in rows of strawberries grown in a greenhouse, allowing the strawberries to bear fruit on top of the cover member, and is an invention that primarily emphasizes water retention property, suppressing evaporation of water from the ground.

The water absorbent heat insulation cover member of Patent Document 3 is an invention of a heat insulation material for agricultural use in which the nonwoven fabric containing highly water absorbent polymer is laminated onto the porous resin film. The speed of absorbing water droplets dripped onto the film surface is made to be within 60 seconds so as to prevent dew condensation water from transpiration and to retain dew condensation water to maintain quality of strawberries. However, it is not intended to balance the retention and transpiration of dew condensation water by the nonwoven fabric.

That is, the invention of Patent Document 3 involves covering the surface of the nonwoven fabric with the porous resin film so that the nonwoven fabric retains dew condensation water while preventing dew condensation water from transpiring, thereby preventing deterioration in the quality of strawberries.

Unlike the laminate structure of a resin foam and nonwoven fabric in the present invention, the invention of Patent Document 3 is a laminate structure of the porous resin film and nonwoven fabric, and thus the structures of the two inventions are different. Furthermore, in the invention of Patent Document 3, although it is easy to retain absorbed water since the surface is covered with the resin film, the covering layer of the resin film prevents evaporation, which may be an inhibiting factor when used for the purpose of promoting evaporation for prevention of condensation as in the present application. Thus, there is no mention of preventing dew condensation water from coagulating and promoting transpiration of water by diffusion, such as moisture retention parameters of the nonwoven fabric. Also, a mixing ratio of Bell Oasis, which is highly water absorbent resin fibers, is within a range of 1% by mass to 10% by mass in Patent Document 3, whereas the product of the present invention differs in that the mixing ratio of the highly water absorbent resin fibers in a layer containing the highly water absorbent resin fibers is between 10% by mass and 80% by mass, as will be described below.

Patent Document 4 describes a multifunctional sheet-like absorbent including three components: an absorbent layer mainly composed of highly water absorbent resin, a nonwoven fabric like base material carrying highly water absorbent resin, and a binder component for binding the highly water absorbent resin with each other and between the highly water absorbent resin and the base resin. The invention of Patent Document 4 is the multifunctional absorbent having a multilayer structure, which is used for absorbent products such as baby diapers, adult diapers, female incontinence products, blood absorbents, and breast pads.

The absorbent sheet of Patent Document 4 has been disclosed as a multifunctional sheet-like absorbent having a multiphase structure characterized in that an absorbent area phase (a phase A) including the absorbent layer and the nonwoven fabric like base material carrying the same and a diffusion/acquisition area phase (a phase B) including only the nonwoven fabric like base material and almost no highly water absorbent resin are distributed on a surface of the sheet-like absorbent so that the phase A and phase B can be distinguished from one another. Patent Document 4 discloses a nonwoven fabric of a two-layer laminated structure in which one layer includes highly water absorbent resin and the nonwoven fabric laminated thereon includes synthetic resin fibers. In Patent Document 4, granulated highly water absorbent resin is used for the highly water absorbent resin layer of an layer A. Thus, the fibers forming the nonwoven fabric and the highly water absorbent resin are to be bounded by a binding agent. In contrast, in the present invention, highly water absorbent resin fibers are used and thus there is no need to use the binding agent since skeletal fibers and the highly water absorbent resin fibers are tangled with each other. The nonwoven fabric of a layer B is formed of a bulky acquisition layer having a high resilience value (elastic recovery rate) to improve water permeability, which is intended for diffusion and acquisition of water. In contrast, in the present application, a layer including no highly water absorbent resin is intended for diffusion and evaporation of water. Furthermore, the objective is to achieve a balance between the water retention property and diffusive evaporation property of the nonwoven fabric by water retention parameters of the nonwoven fabric for preventing dew condensation water from coagulating and promoting transpiration of water by diffusion. Patent Document 4 has no such description and differs in that its purpose is diffusion of water and acquisition of water into the highly water absorbent resin layer. The structure of the water absorbent nonwoven fabric itself is different, and Patent Document 4 also differs in that, if only a nonwoven fabric is used as a heat insulation cover member, insulation effects of the resin foam cannot be obtained and an amount of dew condensation water in the nonwoven fabric layer increases.

Patent Document 5 has disclosed a water absorbent composite having a gradient of water absorption capacity in a thickness direction. The composite is formed by integrating a first layer including nonwoven web composed mainly of synthetic fibers having a surface wetting property with respect to water, and a second layer formed of a shape-stabilized highly water absorbent polymer sheet with water retention rate that is significantly higher than that of the first layer.

Also, in Patent Document 5, liquid supplied to the first layer is momentarily received by the first layer without being retained and passed quickly to be absorbed stably in the second layer. Thus, it is described that the first layer is always on standby for the next excretion, which is advantageous to be used in many applications including diapers and sanitary napkins.

By binding the layers of the multilayer sheet to each other and having fibers for the main absorbent layer of the second layer to improve the shape stability of the laminate structure of the nonwoven fabric, Patent Document 5 can provide the sheet-like composite absorbent that has an extremely high absorbent efficiency of liquid with excellent shape stability even after liquid absorption.

In the sheet-like composite absorbent of Patent Document 5, in which the nonwoven fabrics are laminated, the first layer is formed of the nonwoven fabric web mainly composed of synthetic fibers having the surface wetting property with respect to water. The second layer is the highly water absorbent polymer sheet having the high water retention rate and high shape stabilization, which is formed by binding hydroentangling precursor fibers to a skeleton that is primarily composed of polypropylene fibers and then subjecting the obtained composite fabric to a highly absorbent treatment.

As a result, the water absorbent composite of Patent Document 5 has the gradient of water absorption capacity between the first and second layers, and due to such the gradient of water absorption capacity, the excreted liquid is momentarily received by the first layer. Then, the liquid passes through the first layer quickly without being retained therein and is stably absorbed in the second layer.

In Patent Document 5, when viewed as a laminated structure, it is preferable that the first layer has high permeability to the second layer, and there is no description regarding diffusion property in a direction toward the surface of the nonwoven fabric of the first layer.

The invention of Patent Document 5 is an invention of highly water absorbent diaper made only of the nonwoven fabrics of the laminated structure, and is different from the heat insulation cover member for drip prevention or drip suppression of dew condensation water in refrigerant pipes of air conditioners or the like of the present invention, and thus the two inventions have different purposes.

Thus, since the invention of Patent Document 5 does not require an insulating layer for prevention of condensation like the invention of the present application, the two inventions have a structural difference in that one has a laminated structure of a resin foam and nonwoven fabric, while the other has a structure including only the nonwoven fabric. The invention of the present application has a laminated structure of resin foam and nonwoven fabric, and thus is different from the invention of Patent document 5, which is an invention of only nonwoven fabric, in that the protection effects and insulation effects by the resin foam are added. Furthermore, in the invention of the present application, it is considered not only water retention property but also how to balance water retention property and diffusive evaporation property of the nonwoven fabric by using water retention parameters of the nonwoven fabric for preventing dew condensation water from coagulating and promoting transpiration of water by diffusion. On the other hand, for the nonwoven fabric in Patent Document 5, although there is a description regarding the gradient of absorbent capacity between the first and second layers and water retention property of the second layer, there is no description regarding a mechanism for diffusion and transpiration of water, and the invention of Patent Document 5 is not intended for prevention of condensation by promoting diffusion from an outer surface of a the protection member to evaporate water. Furthermore, the covering member of the present invention utilizes the ability of highly water absorbent resin fibers to not only absorb water in response to changes in temperature and humidity but also to release water in a dry state, whereas Patent Document 5 differs in that only water absorbency is intended.

PRIOR ARTS

[Patent Document 1] Japanese Laid-open Patent Application Publication No. H09-049587 (JP-A- H09-049587)
[Patent Document 2] Japanese Laid-open Patent Application Publication No. H09-001710 (JP-A- H09-001710)
[Patent Document 3] Japanese Laid-open Patent Application Publication No. H09-300511 (JP-A- H09-300511)
[Patent Document 4] Japanese Laid-open Patent Application Publication No. 2000-201975 (JP-A- 2000-201975)
[Patent Document 5] Japanese Laid-open Patent Application Publication No. H07-155594 (JP-A- H07-155594)

SUMMARY OF THE INVENTION

(PROBLEMS TO BE SOLVED BY THE INVENTION)

For covering refrigerant pipes and drain pipes of heat exchange devices such as air conditioners, it has been considered to use a heat insulation cover member made by laminating a polyethylene film to a polyethylene resin foam and embossing the laminated surface of the resin foam. However, in such the case, there is a problem of condensation if the usage environment is severe. Thus, a method for preventing condensation by directly attaching a nonwoven fabric soaked with polymer water absorbent material to ducts and pipes has been proposed. In the case of such the cover member formed of only the nonwoven fabric, heat insulation is to be ensured only by the nonwoven fabric. Thus, there is a problem that the thickness and weight of the nonwoven fabric wound around the heat exchange device may increase, and, at the same time, it is difficult to uniformly distribute the polymer water absorbent material.

To obtain heat/cold insulation effects using a highly insulating resin foam, a method has been proposed for reinforcing both ends of a structure having a resin foam with a synthetic resin sheet attached to a surface of the foam when the structure is wound around a heat exchanger pipe.

However, even with such the heat insulation cover member in which the nonwoven fabric is disposed instead of the synthetic resin sheet on the surface of the foam and embossed, dew condensation water may still drip due to influence of gravity when the vertical piping is too long or runs over beams or vertical walls of apartments or buildings. When dew condensation water drips, molds or fungi occur at or around the drip area, making the surrounding environment unhygienic.

Thus, it is an object of the present invention to provide a heat insulation cover member that can prevent or suppress dripping of dew condensation water in a case of piping such as vertical piping of refrigerant pipes of an air conditioner or the like or duct covers where dew condensation water may likely to drip, a covering member for other heat exchange pipes and ducts, a piping structure and a duct covering structure using the same, an electrical device box covering structure, a nonwoven fabric to be used in the heat insulation cover member and a method for using the nonwoven fabric in the heat insulation cover member, and a method for using the heat insulation cover member for various covering members including the heat exchange pipe covering member.

Here, in the present invention, the heat exchange pipe covering member refers to a piping member such as a joint covering member, an elbow covering member, a tee covering member, or a covering member for covering an existing conventional pipe cover. Various covering members including the heat exchange pipe covering member include, in addition to the heat exchange pipe covering member, a duct covering member and an electrical device box covering member.

(MEANS FOR SOLVING PROBLEMS)

In view of the above object, it has been discovered in the present invention that, in a severe use environment where dew condensation water drips in practical piping, dew condensation water is less likely to drip when a nonwoven fabric (preferably a nonwoven fabric of which water retention parameters specified in the present invention and water retention capacity in a water retention property test satisfy predetermined values) made of a mixture of highly water absorbent resin fibers and thermoplastic resin fibers for forming at least a skeletal structure is laminated onto a surface of a polyethylene-based resin foam. Although the reason for this is not entirely clear, it is presumed that insulating effects of the resin foam increases the surface temperature of the nonwoven fabric disposed on the surface of the covering member, which makes it less likely to cause dew condensation water, and the highly water absorbent resin fibers are incorporated into the nonwoven fabric, which not only increases the water retention property but also optimizes diffusion and evaporation of water within the nonwoven fabric, thereby resulting in the excellent effects as mentioned above. The present invention was made based on such the new findings and has achieved to complete a heat insulation cover member for drip prevention or drip suppression of dew condensation water, a covering member for other heat exchange pipes and ducts, a piping structure and a duct covering structure using the same, an electrical device box covering structure, a nonwoven fabric to be used in the heat insulation cover member and a method for using the nonwoven fabric in the heat insulation cover member, and a method for using the heat insulation cover member for various covering members including the heat exchange pipe covering member. Here, it is also achieved to complete methods for using the heat insulation covering member as a heat exchanger piping covering member, such as a joint covering member, an elbow covering member, a tee member covering member, a covering member for covering an existing conventional pipe cover, a duct covering member, and an electrical device box covering member. That is, the present invention includes the following means.

(1) A heat insulation cover member for drip prevention or drip suppression of dew condensation water, in which a nonwoven fabric is disposed on a surface of a resin foam, is characterized in that: the resin foam is a polyethylene-based resin foam having closed cells and the nonwoven fabric is fixed by fusion or bonding to one surface of the resin foam; the nonwoven fabric is formed of a single-layer nonwoven fabric in which thermoplastic resin fibers are mixed with a predetermined amount of highly water absorbent resin fibers, and at least some of the thermoplastic resin fibers are fused or bonded to one another; and the nonwoven fabric includes 10% by mass or more and 80% by mass or less of the highly water absorbent resin fibers, and 20% by mass or more and 90% by mass or less of the thermoplastic resin fibers as the remainder.

(2) The heat insulation cover member for drip prevention or drip suppression of dew condensation water according to (1) is characterized in that a fiber diameter of the thermoplastic resin fibers used in the nonwoven fabric is in a range between 5 $\mu$m and 30 $\mu$m; a product thickness of the nonwoven fabric is between 0.5 mm and 2.0 mm; and a basis weight of the nonwoven fabric is between 30 g/m$^2$ and 300 g/m$^2$.

(3) The heat insulation cover member for drip prevention or drip suppression of dew condensation water according to (1) is characterized in that: the thermoplastic resin fibers, which are base resin fibers of the nonwoven fabric, are mono fiber or core-sheath structure fiber of polyethylene terephthalate, polyethylene, or polypropylene, or fiber in which any of the above fibers are mixed with other fibers; at least some of the thermoplastic resin fibers of the nonwoven fabric are fused or bonded to one another; and the polyethylene-based resin foam includes a flame retardant.

(4) The heat insulation cover member for drip prevention or drip suppression of dew condensation water according to (1) is characterized in that: a water retention parameter of the nonwoven fabric for retaining water against gravity is 0.70 or more, and water retention capacity of the nonwoven fabric determined under predetermined conditions satisfies 7.0 g or more; the water retention parameter is a parameter calculated by preparing a strip-shaped test piece having dimensions of 200 mm in length and 25 mm in width, providing a gauge line across a width of a surface of the test piece at the midpoint in a longitudinal direction, and dripping 400 $\mu$L of colored test liquid onto the gauge line while the test piece is held horizontally, holding the test piece vertically for five minutes immediately after dripping, and dividing an average value in a width direction of ascending distance from the gauge line to a point at which the test liquid reaches upward on the test piece by an average value in the width direction of descending distance from the gauge line to a point at which the test liquid reaches downward on the test piece, which is an index value using the ascending distance from the test piece gauge line and the descending distance from the test piece gauge line; and the water retention capacity is determined by inserting a refrigerant pipe having a length of 150 mm and a diameter of 25 mm with the heat insulating cover member attached to an outer periphery thereof, into a container containing 20 g of water, and then holding the container in a constant-temperature-and-humidity chamber at a temperature of 23°C and a humidity of 30% for six hours, after which the container is removed and the water is removed, and the water retention capacity is determined from mass after water removal.

Here, in (1), since the nonwoven fabric used in the invention includes 10% by mass or more and 80% by mass or less of the highly water absorbent resin fibers, it is possible to prevent or suppress dripping of dew condensation water, and if the nonwoven fabric further includes 20% by mass or more and 90% by mass or less of the thermoplastic resin, it is possible for the nonwoven fabric to diffuse and evaporate absorbed water as well as to ensure mechanical strength of the nonwoven fabric including the highly water absorbent resin and fusion or bonding strength thereof with the resin foam.

(5) A heat insulation cover member for drip prevention or drip suppression of dew condensation water in which a nonwoven fabric is disposed on a surface of a resin foam is characterized in that: the resin foam is a polyethylene-based resin foam having closed cells and the nonwoven fabric is fixed by fusion or bonding to one surface of the resin foam; the nonwoven fabric is a laminate structured nonwoven fabric having a laminate structure of two layers; a first layer of the nonwoven fabric is formed only of thermoplastic resin fibers, and at least some of the thermoplastic resin fibers are fused or bonded to one another; a second layer of the nonwoven fabric is formed of a nonwoven fabric in which thermoplastic resin fibers are mixed with a predetermined amount of highly water absorbent resin fibers, and at least some of the thermoplastic resin fibers are fused or bonded to one another; and the nonwoven fabric of the second layer includes, to a total mass of the nonwoven fabric forming the second layer, 10% by mass or more and 80% by mass or less of the highly water absorbent resin fibers, and 20% by mass or more and 90% by mass or less of the thermoplastic resin fibers as the remainder, and either the first layer or the second layer of the nonwoven fabric is joined to the surface of the resin foam.

(6) The heat insulation cover member for drip prevention or drip suppression of dew condensation water according to (5) is characterized in that: a total thickness of the first layer and the second layer of the nonwoven fabric is between 0.5 mm and 2.0 mm and a total basis weight of the first layer and the second layer is between 30 $g/m^2$ and 300 $g/m^2$; the thickness and basis weight of the nonwoven fabric of the first layer are smaller than the thickness and basis weight of the nonwoven fabric of the second layer, respectively; and the fiber diameter of the thermoplastic resin fibers used in the nonwoven fabric of the first layer or the second layer is in a range between 5 $\mu$m and 30 $\mu$m.

(7) The heat insulation cover member for drip prevention or drip suppression of dew condensation water according to (5) is characterized in that: the total thickness of the first layer and the second layer of the nonwoven fabric is between 0.5 mm and 2.0 mm and the total basis weight of the first layer and the second layer is between 30 $g/m^2$ and 300 $g/m^2$; the thickness of the nonwoven fabric of the first layer is between 0.1 mm and 0.5 mm and the basis weight of the first layer is between 5 $g/m^2$ and 50 $g/m^2$, the basis weight of the second layer is between 25 $g/m^2$ and 250 $g/m^2$, and the thickness of the second layer is between 0.4 mm and 1.5 mm; the thickness and basis weight of the nonwoven fabric of the first layer are smaller than the thickness and basis weight of the nonwoven fabric of the second layer, respectively; and the fiber diameter of the thermoplastic resin fibers used for the nonwoven fabric of the first layer or the second layer is in a range between 5 $\mu$m and 30 $\mu$m.

(8) The heat insulation cover member for drip prevention or drip suppression of dew condensation water according to (5) is characterized in that: the thermoplastic resin fibers, which are base resin fibers of the nonwoven fabric, are either mono fibers or core-sheath structure fibers of polyethylene terephthalate, polyethylene, or polypropylene, or fibers in which any of the above fibers are mixed with other fibers; at least some of the thermoplastic resin fibers of the nonwoven fabric are fused or bonded to one another; and the polyethylene-based resin foam includes a flame retardant.

Here, in (5), since the nonwoven fabric forming the second layer used in the invention includes 10% by mass or more and 80% by mass or less of the highly water absorbent resin fibers to the total mass of the nonwoven fabric forming the second layer, it is possible to prevent or suppress dripping of dew condensation water, and if the nonwoven fabric further includes 10% by mass or more and 80% by mass or less of the thermoplastic resin, it is possible for the nonwoven fabric to diffuse and evaporate absorbed water in the second layer as well as to ensure mechanical strength of the nonwoven fabric of the second layer and fusion or bonding strength thereof with the resin foam.

(9) The heat insulation cover member for drip prevention or drip suppression of dew condensation water according to (5) is characterized in that: a water retention parameter of the nonwoven fabric for retaining water against gravity is 0.70 or more, and water retention capacity of the nonwoven fabric determined under predetermined conditions satisfies 7.0 g or more; the water retention parameter is a parameter calculated by preparing a strip-shaped test piece having dimensions of 200 mm in length and 25 mm in width, providing a gauge line across a width of a surface of the test piece at the midpoint in a longitudinal direction, and dripping 400 $\mu$L of colored test liquid onto the gauge line while the test piece is held horizontally, holding the test piece vertically for five minutes immediately after dripping, and dividing an average value in a width direction of ascending distance from the gauge line to a point at which the test liquid reaches upward on the test piece by an average value in the width direction of descending distance from the gauge line to a point at which the test liquid reaches downward on the test piece, which is an index value using the ascending distance from the test piece gauge line and the descending distance from the test piece gauge line; and the water retention capacity is determined by inserting a refrigerant pipe having a length of 150 mm and a diameter of 25 mm with the heat insulating cover member attached to an outer periphery thereof, into a container containing 20 g of water, and then holding the container in a constant-temperature-and-humidity chamber at a temperature of 23°C and a humidity of 30% for six hours, after which the container is removed and the water is removed, and the water retention capacity is determined from mass after water removal.

(10) A joint covering member that can be disposed, when piping is covered with the insulation cover member for drip prevention or drip suppression of dew condensation water according to any one of (1) to (9), to cover a gap between the first insulation cover member and the second insulation cover member disposed next to the first insulation cover member in a longitudinal direction of the piping is characterized in that: the joint covering member includes a release paper attached to an adhesive on one surface of a resin foam and a nonwoven fabric attached to the other surface of the resin foam; and the adhesive layer is attached to an outer periphery of the heat insulation cover member, with the surface of the nonwoven fabric attached to the resin foam as an outer periphery, such that the joint covering member can be used at the joint of the cover members to prevent or suppress dripping of dew condensation water.

(11) An elbow covering member for drip prevention or drip suppression of dew condensation water is characterized in that: the elbow covering member can be obtained by press-molding the heat insulation cover member for drip prevention or drip suppression of dew condensation water according to any one of (1) to (9) of a predetermined size so that the elbow covering member has a substantially L-shaped shape after being folded with backs thereof facing each other to cover a 90° bent portion of piping; and with a surface of a nonwoven fabric attached to a resin foam as an outer surface, the elbow covering member covers an elbow portion of the 90° bent portion or vicinity of a 90° bent portion where the piping is directly bent 90°, thereby preventing or suppressing dripping of dew condensation water.

(12) A tee member covering member is characterized in that: a tee member is a metal-made piping member having a portion branching downward or upward from a portion that corresponds to a straight head portion of a T shape, and, to cover the tee member with the heat insulation cover member for drip prevention or drip suppression of dew condensation water according to any one of (1) to (9), the tee member covering member includes a branching portion branching downward or upward with a head portion of a T shape as a folding portion; and, when the folding portion is folded with the folding portion being a hinge starting point for opening, the folding portion and the branching portion surround the entire tee member, thereby forming a tee member covering structure that can prevent or suppress dripping of dew condensation water.

(13) A covering member for covering an existing conventional pipe cover using the heat insulation cover member for drip prevention or drip suppression of dew condensation water according to any one of (1) to (9) is characterized in that: a cover member, of which surface is attached with a polyethylene film, for covering an existing pipe is wrapped around a heat exchanger pipe substantially cylindrically so that both ends of the cover member face each other at the center; and the heat insulation cover member is further wrapped to cover an outer surface of the covering member for covering an existing conventional pipe cover with a nonwoven fabric surface being an outer surface so that both ends of the heat insulation cover member face each other, thereby preventing or suppressing dripping of dew condensation water.

(14) A duct covering member using the heat insulation cover member for drip prevention or drip suppression of dew condensation water according to any one of (1) to (9) is characterized in that: the duct covering member can cover an outer surface of a duct.

(15) A piping structure including at least any one of horizontal piping, diagonal piping, vertical piping, and bent piping in which an outer periphery of a refrigerant pipe is covered with the heat insulation cover member for drip prevention or drip suppression of dew condensation water according to any one of (1) to (9) is characterized in that: the refrigerant pipe is covered with each heat insulation cover member for drip prevention or drip suppression of dew condensation water with a surface of the single-layer nonwoven fabric thereof or a surface of either the first layer or second layer of the laminated nonwoven fabric thereof being an outer layer.

(16) A piping structure including at least any one of horizontal piping, diagonal piping, vertical piping, and bent piping, in which outer peripheries of two refrigerant pipes are covered respectively with the heat insulation cover members for drip prevention or drip suppression of dew condensation water according to any one of (1) to (9) and the heat insulation cover members are heat fused or bonded to each other in a twin-type piping having a figure-eight cross section, is characterized in that: the outer periphery of each refrigerant pipe of the piping structure is covered with each heat insulation cover member for drip prevention or drip suppression of dew condensation water with a surface of the single-layer nonwoven fabric thereof or a surface of either the first layer or second layer of the laminated nonwoven fabric thereof being an outer layer, and the refrigerant pipes are disposed facing each other and the outer surfaces of the nonwoven fabrics are heat fused or bonded so as to integrate the two pipes into the twin-type piping.

(17) A piping structure for refrigerant pipes including at least any one of horizontal piping, diagonal piping, vertical piping, and bent piping, in which one or more refrigerant pipes, a drain pipe and wiring, or a wiring pipe are prepared and housed inside the heat insulation cover member for drip prevention or drip suppression of dew condensation water according to any one of (1) to (9), is characterized in that: with a surface of the single-layer nonwoven fabric thereof or a surface of either the first layer or second layer of the laminated nonwoven fabric thereof being an outer layer, the heat insulation cover member encloses the refrigerant pipe, drain pipe, and wiring so that an outer periphery surface of the heat insulation cover member for drip prevention or drip suppression of dew condensation water has a substantially cylindrical cross section and that the refrigerant pipes, drain pipe and wiring, or wiring pipe can be housed inside the heat insulation cover member for drip prevention or drip suppression of dew condensation water, such that components fitted inside the piping are housed inside the heat insulation cover member for drip prevention or drip suppression of dew condensation water. As above, the wiring may be inside the piping or the wiring may be disposed inside the piping structure with the wiring being exposed.

(18) A covering structure for heat exchanger ducts using the heat insulation cover member for drip prevention or drip suppression of dew condensation water is characterized in that: an outer periphery of an entire outer surface of an iron-made heat exchanger duct having a substantially rectangular cross section is covered with the heat insulation cover member for drip prevention or drip suppression of dew condensation water according to any one of (1) to (9).

(19) A covering structure for an electrical device box is characterized in that: the heat insulation cover member for drip prevention or drip suppression of dew condensation water according to any one of (1) to (9) is disposed on at least any one of inner peripheral surfaces including a ceiling surface, and a back surface or a front surface of a distribution panel excluding an opening of the distribution panel, of an electrical device box, which is for receiving power from an external power source, and distributing or sub-distributing the received power to required equipment.

(20) A nonwoven fabric to be used for a heat insulation cover member for drip prevention or drip suppression of dew condensation water is characterized in that: the nonwoven fabric includes thermoplastic resin fibers mixed with a predetermined amount of highly water absorbent resin fibers, in which a water retention parameter of the nonwoven fabric for retaining water against gravity is 0.70 or more, and water retention capacity of the nonwoven fabric determined under predetermined conditions satisfies 7.0 g or more; a product thickness of the nonwoven fabric is between 0.5 mm and 2.0 mm and a basis weight of the nonwoven fabric is between 30 g/m$^2$ and 300 g/m$^2$; the nonwoven fabric is formed of a nonwoven fabric including the thermoplastic resin fibers, having a fiber diameter in a range between 5 $\mu$m and 30 $\mu$m, at least some of which are fused or bonded to one another, mixed with the predetermined amount of the highly water absorbent resin fibers; the nonwoven fabric includes 10% by mass or more and 80% by mass or less of the highly water absorbent resin fibers, and 20% by mass or more and 90% by mass or less of the thermoplastic resin fibers as the remainder; the water retention parameter is a parameter calculated by preparing a strip-shaped test piece having dimensions of 200 mm in length and 25 mm in width, providing a gauge line across a width of a surface of the test piece at the midpoint in a longitudinal direction, and dripping 400 $\mu$L of colored test liquid onto the gauge line while the test piece is held horizontally, holding the test piece vertically for five minutes immediately after dripping, and dividing an average value in a width direction of ascending distance from the gauge line to a point at which the test liquid reaches upward on the test piece by an average value in the width direction of descending distance from the gauge line to a point at which the test liquid reaches downward on the test piece, which is an index value using the ascending distance from the test piece gauge line and the descending distance from the test piece gauge line; and the water retention capacity is determined by inserting a refrigerant pipe having a length of 150 mm and a diameter of 25 mm with the heat insulating cover member attached to an outer periphery thereof, into a container containing 20 g of water, and then holding the container in a constant-temperature-and-humidity chamber at a temperature of 23°C and a humidity of 30% for six hours, after which the container is removed and the water is removed, and the water retention capacity is determined from mass after water removal.

(21) A nonwoven fabric to be used for a heat insulation cover member for drip prevention or drip suppression of dew condensation water is characterized in that : the nonwoven fabric includes thermoplastic resin fibers mixed with a predetermined amount of highly water absorbent resin fibers, in which a water retention parameter of the nonwoven fabric for retaining water against gravity is 0.70 or more, and water retention capacity of the nonwoven fabric determined under predetermined conditions satisfies 7.0 g or more; the nonwoven fabric is a laminate structured nonwoven fabric having a laminate structure of a first layer and second layer of nonwoven fabrics; a total thickness of the nonwoven fabric is between 0.5 mm and 2.0 mm, a total basis weight of the nonwoven fabric is between 30 g/m$^2$ and 300 g/m$^2$, the thickness of the nonwoven fabric of the first layer is between 0.1 mm and 0.5 mm, and the basis weight of the first layer is between 5 g/m$^2$ and 50 g/m$^2$; the thickness and basis weight of the nonwoven fabric of the first layer are smaller than the thickness and basis weight of the nonwoven fabric of the second layer, respectively; the first layer of the nonwoven fabric is formed only of the thermoplastic resin fibers, having a fiber diameter in a range between 5 $\mu$m and 30 $\mu$m, at least some of which are fused or bonded to one another; the nonwoven fabric forming the second layer includes, as the base fibers, the same thermoplastic resin fibers as the first layer; the second layer of the nonwoven fabric is formed of the nonwoven fabric including the base resin fibers, which is the thermoplastic resin fibers, having a fiber diameter in a range between 5 $\mu$m and 30 $\mu$m, at least some of which are fused or bonded to one another, mixed with the predetermined amount of the highly water absorbent resin fibers; the nonwoven fabric forming the second layer includes 10% by mass or more and 80% by mass or less of the highly water absorbent resin fibers to a total mass of the nonwoven fabric of the second layer, and 20% by mass or more and 90% by mass or less of the thermoplastic resin fibers as the remainder; the water retention parameter is a parameter calculated by: preparing a strip-shaped test piece having dimensions of 200 mm in length and 25 mm in width, providing a gauge line across a width of a surface of the test piece at the midpoint in a longitudinal direction, dripping 400 $\mu$L of colored test liquid onto the gauge line while the test piece is held horizontally, holding the test piece vertically for five minutes immediately after dripping, and dividing an average value in a width direction of ascending distance from the gauge line to a point at which the test liquid reaches upward on the test piece by an average value in the width direction of descending distance from the gauge line to a point at which the test liquid reaches downward on the test piece, which is an index value using the ascending distance from the test piece gauge line and the descending distance from the test piece gauge line; and the water retention capacity is determined by inserting a refrigerant pipe having a length of 150 mm and a diameter of 25 mm with the heat insulating cover member attached to an outer periphery thereof, into a container containing 20 g of water, and then holding the container in a constant-temperature-and-humidity chamber at a temperature of 23°C and a humidity of 30% for six hours, after which the container is removed and the water is removed, and the water retention capacity is determined from mass after water removal

(22) The nonwoven fabric to be used for the heat insulation cover member for drip prevention or drip suppression of dew condensation water according to either (20) or (21) is characterized in that the thermoplastic resin fibers are either mono fibers or core-sheath structure fibers of polyethylene, polypropylene, or polyethylene terephthalate, or fibers in which any of the above fibers are mixed with other fibers; and at least some of the thermoplastic resin fibers are fused or bonded to one another.

(23) A method for using the laminated structure nonwoven fabric according to (20) or (21) that is to be joined to a surface of a polyethylene-based resin foam having closed cells and used as a heat insulation cover member for drip prevention or drip suppression of dew condensation water is characterized in that: with the first layer or the second layer of the laminated structure nonwoven fabric facing outward, the remaining layer of the layer facing outward is fixed to one surface of the resin foam by fusion or bonding so as to join the nonwoven fabric and the resin foam.

(24) A method for using the heat insulation cover member for drip prevention or drip suppression of dew condensation water according to any one of (1) to (9) for various covering members including a heat exchange pipe covering member is characterized in that: the heat insulation cover member for drip prevention or drip suppression of dew condensation water is used in a joint covering member used for a gap between the heat insulation cover members, an elbow covering member, a tee member covering member, a covering member for covering an existing conventional pipe cover, a duct covering member, and an electrical device box covering member.

(EFFECTS OF THE INVENTION)

According to the heat insulation cover member for drip prevention or drip suppression of dew condensation water of the present invention, it is possible to suppress or prevent dew condensation water from dripping even in a case of vertical piping of refrigerant pipes of an air conditioner or the like in which dew condensation water is likely to drip. The effects of the present invention can be achieved by optimizing both the water reduction effect due to transpiration of condensation water, which occurs when water absorbed in the highly water absorbent resin fibers of the nonwoven fabric is diffused and evaporated against the influence of gravity, and the water retention effect of the highly water absorbent resin fibers mixed in the skeletal structure fibers. As a result, it is possible to obtain the heat insulation cover member for drip prevention or drip suppression of dew condensation water of the present invention, a covering member for other heat exchange pipes and ducts, a piping structure and a duct covering structure using the same, an electrical device box covering structure, a nonwoven fabric to be used in the heat insulation cover member and a method for using the nonwoven fabric in the heat insulation cover member, and a method for using the heat insulation cover member for various covering members including the heat exchange pipe covering member.

BRIEF DESCRIPTION OF DRAWINGS

FIG. 1A is a partially cutaway perspective view showing schematically a piping structure (a single pipe) 10 according to a preferred embodiment of the present invention.
FIG. 1B is a cross-sectional view (b) taken along an X-X arrow in FIG 1A.
FIG. 2A is a partially cutaway perspective view showing schematically a piping structure (a twin pipe having a figure-eight cross section) 20 according to another preferred embodiment of the present invention.
FIG. 2B is a cross-sectional view (b) taken along a Y-Y arrow in FIG 2A.
FIG. 3 is a cross-sectional view showing schematically a piping structure 30 having a two-layered nonwoven fabric layer according to yet another preferred embodiment of the present invention.
FIG. 4 is an enlarged cross-sectional view showing schematically an internal structure of a heat insulation cover member for drip prevention or drip suppression according to the embodiment shown in FIG. 1A (exaggerating particularly the structures of fibers and cells).
FIG. 5A is an enlarged cross-sectional view showing schematically an internal structure of a heat insulation cover member for drip prevention or drip suppression according to the embodiment having the two-layered nonwoven fabric shown in FIG. 3 (exaggerating particularly the structures of fiber and cells), (a) in which an inner layer includes highly water absorbent resin fibers.
FIG. 5B is an enlarged cross-sectional view showing schematically an internal structure of a heat insulation cover member for drip prevention or drip suppression according to a modified example of the embodiment having the two-layered nonwoven fabric shown in

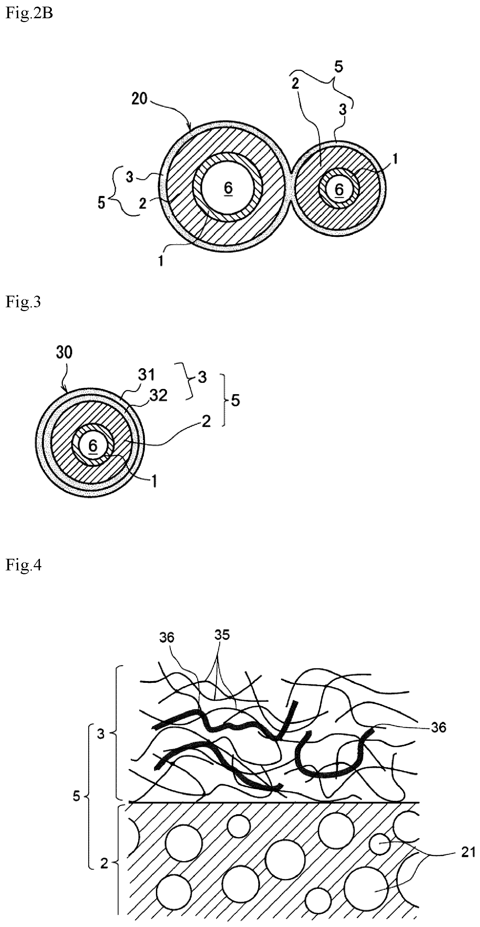

FIG. 3 (exaggerating particularly the structures of fiber and cells), (b) in which an outer layer includes the highly water absorbent resin fibers.

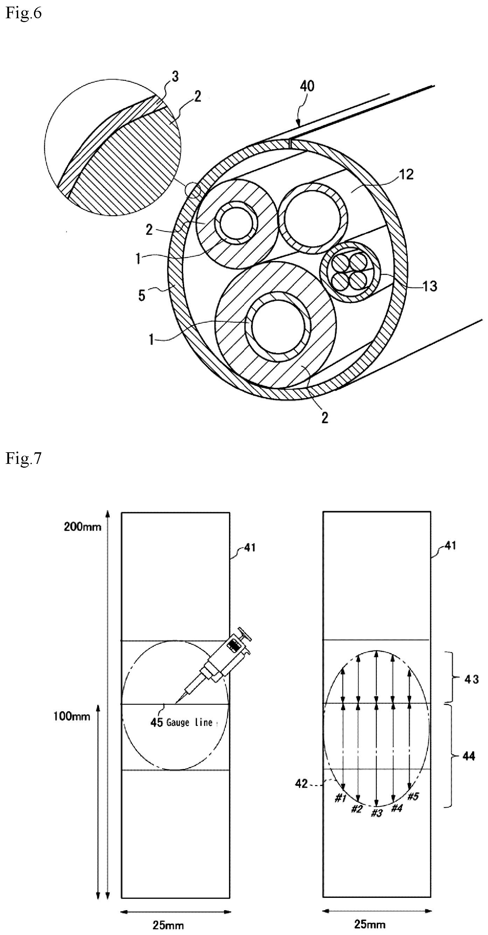

FIG. 6 is a cross-sectional view showing schematically a piping structure 40 (including a refrigerant pipe, drain pipe, and electrical conduit) according to yet another preferred embodiment of the present invention.

FIG. 7 is a front view showing schematically instruments for measuring a retention parameter.

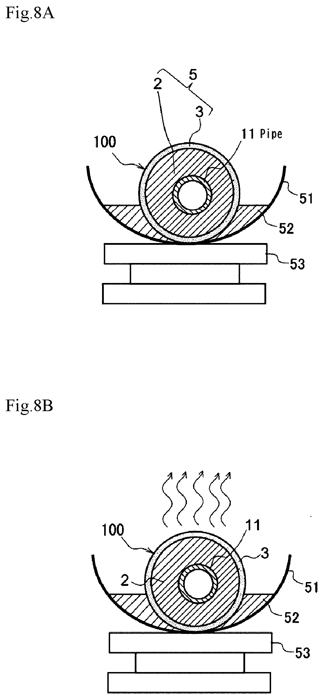

FIG. 8A is a cross-sectional view showing schematically a test piece and an apparatus for measuring water retention capacity.

FIG. 8B is a cross-sectional view showing schematically a state in which water evaporates from the test piece for measuring the water retention capacity.

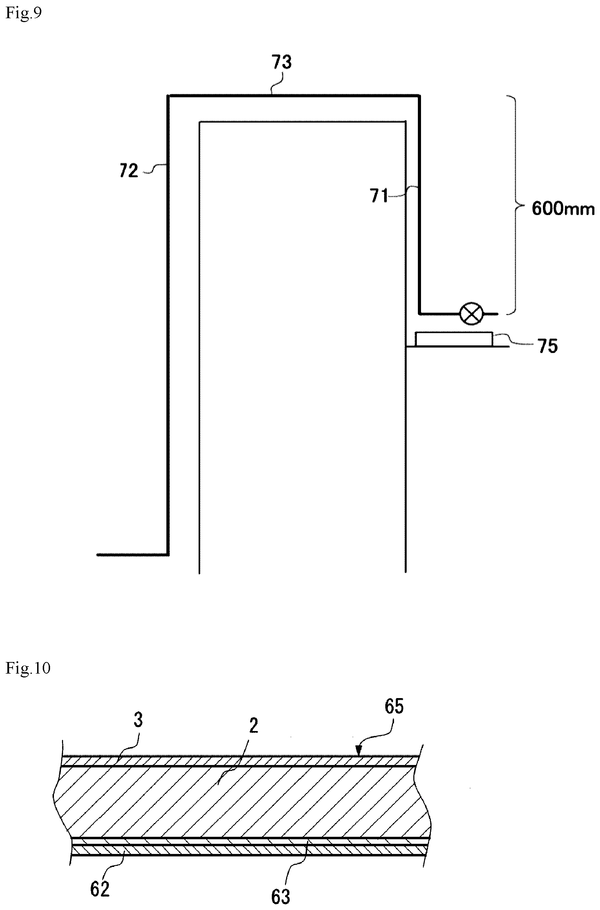

FIG. 9 is a view of a piping configuration showing schematically a test to confirm dripping of dew condensation water under severe environmental conditions using vertical piping with the twin pipe as a test material.

FIG. 10 is a cross-sectional view showing schematically a joint covering member to which a release sheet is applied.

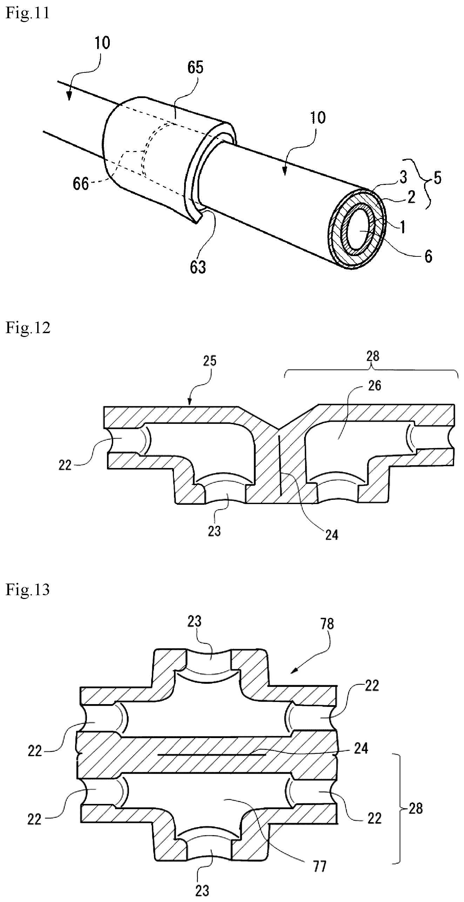

FIG. 11 is a perspective view showing schematically a state in which the joint covering member covers a joint between protection members generated at a joint portion in a piping structure.

FIG. 12 is a front view showing schematically a state in which an elbow covering member (a bent joint) used for a 90° bent portion of piping is expanded.

FIG. 13 is a front view showing schematically a state in which a tee covering member used for a T-shaped branching portion of piping is expanded.

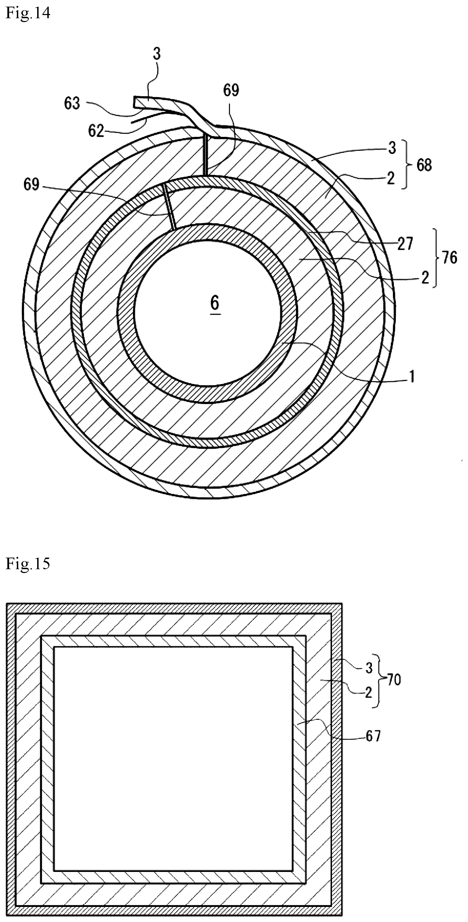

FIG. 14 is a cross-sectional view showing schematically an embodiment when a covering member for covering an existing conventional pipe cover is attached to the conventional pipe cover.

FIG. 15 is a cross-sectional view showing schematically a state in which a duct covering member is attached to an outer peripheral surface of an iron-made duct.

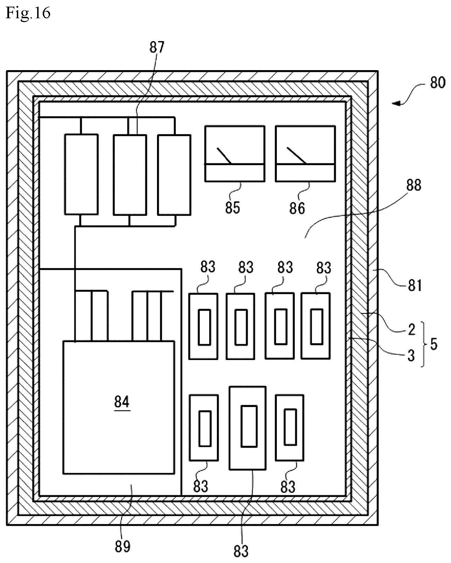

FIG. 16 is a view showing a state in which the heat insulation cover member is laid on inner surfaces of a distribution box, which is an example of an electrical device box.

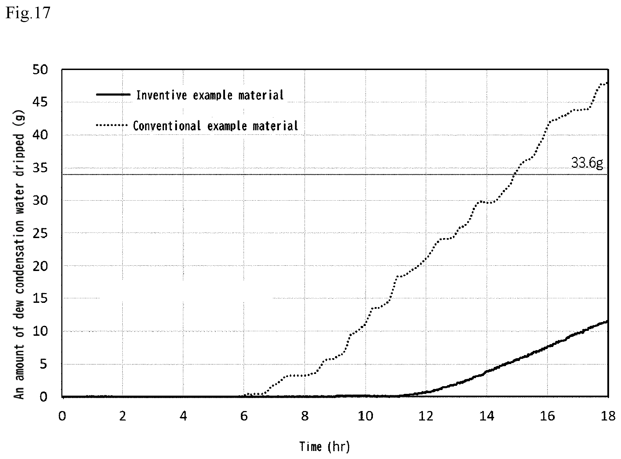

FIG. 17 shows a profile of an amount of dripped dew condensation water versus time in a dew condensation water dripping test, using the vertical piping with the twin pipe as a representative test material, under severe environmental conditions of a temperature of 35°C and a humidity of 90%.

DESCRIPTION OF SOME EMBODIMENTS

Hereinafter, some embodiments of the present invention will be described in detail.

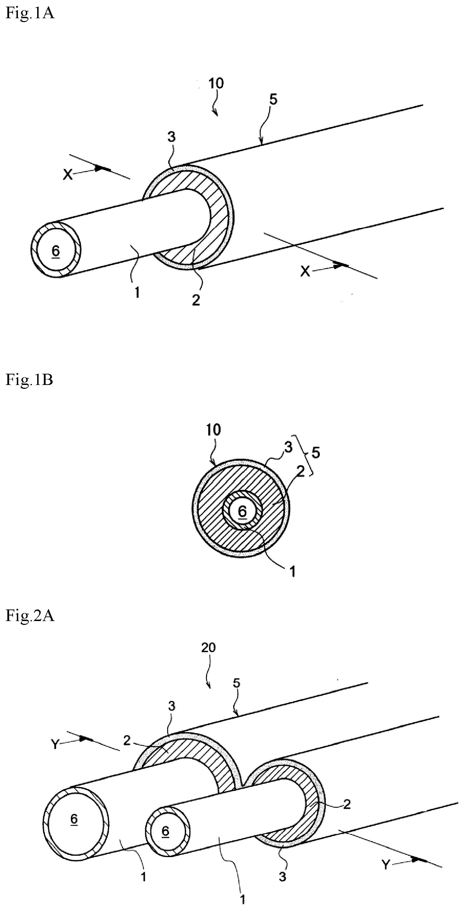

FIG. 1A is a partially cutaway perspective view showing schematically a piping structure 10 including a heat insulation cover member 5 for drip prevention or drip suppression of dew condensation water according to a preferred embodiment of the present invention. FIG. 1B is a cross-sectional view taken along an X-X arrow in FIG 1A. The heat insulation cover member 5 for drip prevention or drip suppression of dew condensation water according to the present embodiment has a structure in which a nonwoven fabric 3 is disposed on a surface of a resin foam 2 that covers a refrigerant pipe 1 including a cavity (a flow path) 6, and is for suppressing or preventing dew condensation water condensed on a surface of the nonwoven fabric from dripping. The resin foam 2 is a polyethylene-based resin foam having closed cells. The nonwoven fabric 3 is fixed by fusion or bonding onto one surface of the resin foam 2.

Although both the terms "diffusive evaporation" and "diffusive transpiration" are used in the present invention, the both terms may be understood as having substantially the same meaning in the present invention hereinafter.

(Various Parameters)

In the heat insulation cover member 5 for drip prevention or drip suppression of dew condensation water according to the present embodiment, the nonwoven fabric 3 includes 10% by mass or more and 80% by mass or less, preferably 15% by mass or more and 75% by mass or less, or even more preferably 25% by mass or more and 75% by mass or less, of highly water absorbent resin fibers. If the content amount of the highly water absorbent resin fibers is below the above-mentioned lower limit, drip prevention or drip suppression of dew condensation water may be deteriorated. If the content amount of the highly water absorbent resin fibers exceeds the above-mentioned upper limit, bonding performance and shape stability of the nonwoven fabric may be deteriorated. If the nonwoven fabric includes a plurality of layers, a compounding amount (mixing ratio) is within the above range in the layer containing the highly water absorbent resin fibers.

An average fiber diameter of base fibers of the nonwoven fabric used in the present invention is preferably within a range of 5 to 30 μm, and fibers within such the range are usually used for nonwoven fabrics. The reason for this is that, if the fiber diameter is less than the above lower limit, strength of the nonwoven fabric is insufficient and durability tends to decrease when used as a protection member surface. Also, if the fiber diameter exceeds the upper limit, the diameter of the nonwoven fabric increases, which tends to make it difficult to obtain entanglement of the base resin or stability of the fused structure. Thus, the average fiber diameter is preferably within a range of 10 to 25 μm or 12 to 23 μm, or more preferably, 15 to 20 μm. Although a measured value for the fiber diameter of each test piece in each working example below is described as the fiber diameter for simplification, such the measured value means the average fiber diameter. Note that the fiber diameter (the fiber diameter except for highly water absorbent resin fibers, which will be described below) of the base fibers (thermoplastic resin fibers) of the nonwoven fabric specified here is similarly applied to the fiber diameter of a first and second layer of a two-layered nonwoven fabric, and the preferred range also similarly means the average fiber diameter.

Also, the highly water absorbent resin fibers used in the present invention may have the fiber diameter larger than that of the thermoplastic resin fibers. However, as the fiber diameter of the highly water absorbent resin fibers becomes too large, an amount of expansion of the highly water absorbent resin fibers becomes too large, causing instability of the structure of the nonwoven fabric of the base resin as well as uneven water-absorption locations within the nonwoven fabric. Because of such the problems, preferably, the maximum value of the diameter of the highly water absorbent resin fibers is 100 $\mu$m or less and a ratio of the diameter of the highly water absorbent resin fibers to that of the thermoplastic resin fibers is within four times. Or, even more preferably, the maximum value of the diameter of the highly water absorbent resin fibers is 80 $\mu$m or less and a ratio of the diameter of the highly water absorbent resin fibers to that of the thermoplastic resin fibers is within three times.

In the heat insulation cover member 5 for drip prevention or drip suppression of dew condensation water according to the present embodiment, a product thickness of the nonwoven fabric 3 is preferably 0.5 to 2.0 mm, more preferably 0.6 to 1.6 mm, even more preferably 0.7 to 1.4 mm. If the nonwoven fabric 3 is a laminated product of two or more layers, it is preferable that a total thickness of such the layers is within the above range. If the thickness of the nonwoven fabric is below the above lower limit, the base resin fibers is not capable of holding the highly water absorbent resin fibers stably. On the other hand, if the product thickness exceeds the above upper limit, shape stability of the nonwoven fabric after absorption of water is deteriorated.

When the nonwoven fabric is formed of two layers, it is preferable that the total product thickness of the two layers of the nonwoven fabric 3 is within the above range. Specifying the two layers separately, the first layer (the layer not including the highly water absorbent resin fibers) has a thickness of preferably 0.05 to 0.6 mm, more preferably 0.1 to 0.5 mm, and even more preferably 0.2 to 0.4 mm. The product thickness of the second layer (the layer including the highly water absorbent resin fibers) is preferably 0.3 to 1.5 mm, more preferably 0.4 to 1.2 mm, and even more preferably 0.5 to 1.0 mm. Relatively, it is preferable that the thickness of the first layer is less than the thickness of the second layer.

A basis weight of the nonwoven fabric 3 is preferably 30 g/m$^2$ or more, more preferably 35 g/m$^2$ or more, and even more preferably 40 g/m$^2$ or more. An upper limit thereof is preferably 300 g/m$^2$ or less, more preferably 250 g/m$^2$ or less, even more preferably 200 g/m$^2$ or less, and even furthermore preferably 150 g/m$^2$ or less. When the nonwoven fabric is formed of two layers, to specify the two layers separately, the basis weight of the second layer (the layer including the highly water absorbent resin fibers) is preferably 10 to 250 g/m$^2$, and more preferably 15 to 200 g/m$^2$, even more preferably 15 to 150 g/m$^2$, and even furthermore preferably 20 to 150 g/m$^2$. The basis weight of the first layer (the layer not including the highly water absorbent resin fibers) is preferably 5 to 50 g/m$^2$, and more preferably 10 to 30 g/m$^2$, and even more preferably 15 to 25 g/m$^2$.

If the nonwoven fabric 3 is a laminated product of two or more layers, the total basis weight thereof is preferably within the above range. In the present invention, if the basis weight of the nonwoven fabric is less than the above-mentioned lower limit, it is impossible to ensure sufficient water retention property. On the other hand, if the basis weight exceeds the above-mentioned upper limit, this may affect fusion performance of a fused portion after water absorption or cause shape instability of the nonwoven fabric after water absorption, which further deteriorates shaping process performance.

Also, the same reasons apply to the upper and lower limits of the second layer including the highly water absorbent resin fibers when the nonwoven fabric is formed of two layers. Here, since the first layer is a layer for promoting transpiration effects through diffusion and evaporation of absorbed water, the basis weight thereof is not to be as large as that of the second layer, and it is preferable that the basis weight of the first layer is less than that of the second layer and may be within the above-mentioned range. Also, regarding the basis weight of a single-layer product and a laminated product, the basis weight in a case of LANSEAL was intentionally set high to understand characteristics of the nonwoven fabric of the laminated product when the basis weight of the second layer is high. However, as can be seen in other cases, it is possible to reduce the total basis weight in the case of laminated products.

In the case of the nonwoven fabric of a single-layer product, a mixing ratio of the highly water absorbent resin fibers in the nonwoven fabric is 10% to 80%, and thus the mixing ratio of the base resin fibers is 20% to 90%. So, when the basis weight of the nonwoven fabric is 300 g/m$^2$, the basis weight of the highly water absorbent resin fibers is 30 to 240 g/m$^2$ and the remainder is the basis weight of the base resin fiber; when the basis weight of the nonwoven fabric is 200 g/m$^2$, the basis weight of the highly water absorbent resin fibers is 20 to 160 g/m$^2$ and the remainder is the basis weight of the base resin fiber; and when the basis weight of the nonwoven fabric is 150 g/m$^2$, the basis weight of the highly water absorbent resin fibers is 15 to 120 g/m$^2$ and the remainder is the basis weight of the base resin fiber. When the basis weight of the nonwoven fabric is 50 g/m$^2$, the basis weight of the highly water absorbent resin fibers is 5 to 40 g/m$^2$ and the remainder is the basis weight of the base resin fiber. Here, considering a relationship between the mixing ratio of the highly water absorbent resin fibers in the nonwoven fabric and an amount of dew condensation water dripping, which will be described below, an improvement rate of the amount of dew condensation water dripping exceeds 50% when the mixing ratio is 25% or more, and thus the mixing ratio is preferably 25% or more. Since increasing the mixing ratio further can reduce the amount of dew condensation water dripping, the mixing ratio is preferably 30% or more. However, considering the cost of the nonwoven fabric, the upper limit may be 60% or less.

Although not limited to a particular value, the fiber diameter of the highly water absorbent resin fibers to be mixed in the nonwoven fabric 3 is preferably larger than the fiber diameter of the thermoplastic resin fibers forming the nonwoven fabric. Specifically, the fiber diameter of the highly water absorbent resin fibers is preferably 10 $\mu$m or more, more preferably 20 $\mu$m or more, and even more preferably 30 $\mu$m or more. An upper limit thereof is preferably 100 $\mu$m or less, more preferably 80 $\mu$m or less, and even more preferably 50 $\mu$m or less.

In the heat insulation cover member 5 for drip prevention or drip suppression of dew condensation water according to the present embodiment, a water retention parameter of the nonwoven fabric 3 for retaining water against gravity is preferably 0.70 or more, more preferably 0.80 or more, and even more preferably 1.00 or more. Although no particular upper limit is set, it is practically difficult for the parameter to exceed 1.3 due to nature of the parameter for retention of water against gravity, and thus the maximum is estimated to be 1.3 or less. When such the water retention parameter is equal to or larger than the above-mentioned lower limit, effects of improving diffusion function or transpiration function can be expected.

In the heat insulation cover member 5 for drip prevention or drip suppression of dew condensation water according to the present embodiment, water retention capacity in a water retention property test of the nonwoven fabric 3 is preferably 7.0 g or more, more preferably 7.5 g or more, even more preferably 8.0 g or more, even furthermore preferably 8.5 g or more, and even furthermore preferably 9.0 g or more. An upper limit thereof is estimated to be highly likely to be 20 g or less, taking into consideration not only an amount of water injected but also water absorption from the test environment atmosphere. When such the water retention capacity is equal to or larger than the above-mentioned lower limit, water retention function is improved and, as a result, effects of drip prevention or drip suppression of dew condensation water can be expected.

Here, the nonwoven fabric of the present invention is expected to have a synergistic effect of the water retention parameter and water retention property, and thus it is necessary to satisfy at least both 0.70 or more of the water retention parameter and 7.0 g or more of the water retention capacity under an evaporative environment, and it is particularly preferable if both are satisfied.

FIG. 2A is a partially cutaway perspective view showing schematically a piping structure 20 including the heat insulation cover member 5 for drip prevention or drip suppression of dew condensation water according to another preferred embodiment of the present invention, and FIG. 2B is a cross-sectional view taken along a Y-Y arrow therein. The piping structure 20 of the present invention is a piping structure having a figure-eight cross section (a twin pipe structure), in which two pipes (the refrigerant pipes 1 each including the cavity (the flow path) 6) are joined together (see FIG. 2B). The pipes may be joined by heat fusion of the nonwoven fabrics 3 as shown in the drawing, or a strong joined structure may be formed by thermal fusion of a part of the resin foams 2. Even in the present embodiment, the parameters, such as the amount and diameter of the thermoplastic resin fibers forming the nonwoven fabric 3 and of the highly water absorbent resin fibers mixed therein are the same as the values defined in the embodiment according to FIG. 1A, and the preferred ranges are also the same.

FIG. 3 is a cross-sectional view showing schematically a piping structure 30 including the heat insulation cover member 5 for drip prevention or drip suppression of dew condensation water according to yet another preferred embodiment of the present invention. In the present embodiment, the nonwoven fabric 3 forming the heat insulation cover member 5 for drip prevention or drip suppression of dew condensation water has a two-layer structure including a first layer 31 and a second layer 32. Even in the present embodiment, the parameters, such as the amount and diameter of the highly water absorbent resin fibers mixed in the nonwoven fabric 3 are the same as the values defined in the embodiment according to FIG. 1A, and the preferred ranges are also the same. The preferred ranges regarding the thickness and basis weight of the nonwoven fabric for the first layer and the second layer are already mentioned above in the section "Various Parameters".

FIG. 4 is an enlarged cross-sectional view showing schematically an internal structure of the heat insulation cover member 5 for drip prevention or drip suppression according to the embodiment shown in FIG. 1A. The drawing merely shows a schematic microscopic structure, and the actual product may not completely match the drawing in the present invention. In the present embodiment, as shown in the drawing, thermoplastic resin fibers 35 forming the nonwoven fabric 3 and highly water absorbent resin fibers 35 mixed therein are used. The thermoplastic resin fibers 35 may have a structure in which fibers are entangled with each other and partially fused or bonded.

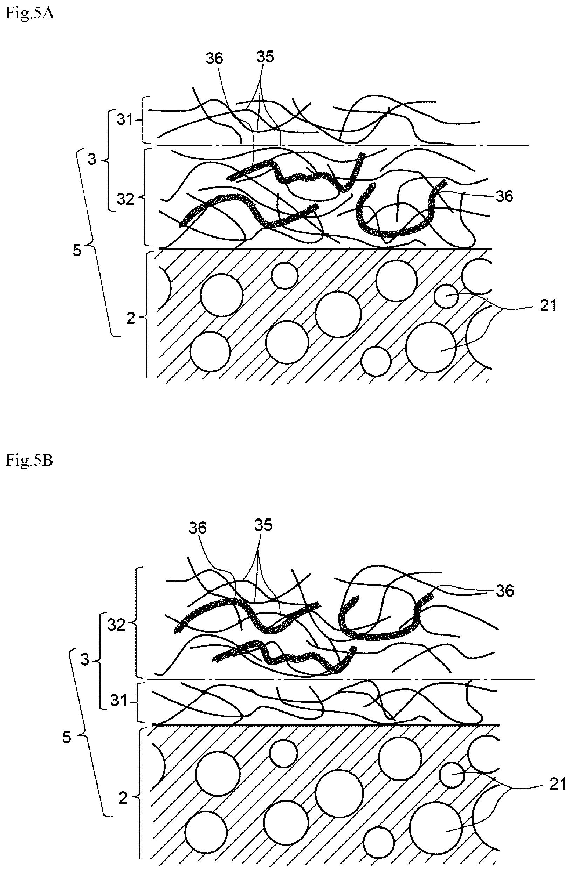

FIG. 5A is an enlarged cross-sectional view showing schematically an internal structure of the heat insulation cover member 5 for drip prevention or drip suppression according to the embodiment shown in FIG. 3. In the present embodiment, any bonding structure may be used between the first layer 31 and the second layer 32, or the thermoplastic resin fibers 35 may be entangled with each other or partially heat fused or bonded. The embodiment of FIG. 5A shows an examples in which the highly water absorbent resin fibers 36 are mixed in the second layer 32, which is disposed as a lower layer. An embodiment of FIG. 5B is an example in which upper and lower layers of the nonwoven fabric in FIG. 5A are inverted. That is, in FIG. 5B, the highly water absorbent resin fibers 36 is mixed in the second layer 32, which is disposed as the upper layer. Although not particularly limited in the present invention, a preferable embodiment is the one in which an outer layer (the first layer) 31 is not mixed with the highly water absorbent resin fibers and an inner layer (the second layer) includes the highly water absorbent resin fibers (FIG. 5A).

(Resin foam)

In the present invention, the resin foam 2 includes closed cells 21 (FIG. 4, FIG. 5A, and FIG. 5B). In the present invention, the resin foam 2 is a polyethylene-based resin foam. That is, examples of resin to be used for the resin foam 2 includes single polyethylene-based resin such as low-density polyethylene (LDPE) and high-density polyethylene (HDPE), and mixed resin of low-density polyethylene and high-density polyethylene. Also, such the polyethylene-based resin foam can be provided with heat resistance and flame retardancy as necessary. In the case of the mixed resin of low-density polyethylene and high-density polyethylene, low-density polyethylene and the high-density polyethylene can be mixed with a predetermined mixing ratio, for example, 40 parts by mass of the low-density polyethylene to 60 parts by mass of the high -density polyethylene. As polyethylene-based resin, in addition to the low-density polyethylene and the high-density polyethylene, modified polyethylene-based resin such as polyethylene vinyl acetate copolymer (EVA) can be used. A reason why polyethylene vinyl acetate copolymer is used in place of polyethylene is that polyethylene vinyl acetate copolymer has high flexibility and elasticity, making it possible to be used for various product applications.

For example, F120N manufactured by Ube-Maruzen Polyethylene Co, Ltd. can be used as low-density polyethylene; HD1300 manufactured by Japan Polyethylene Corporation can be used as high-density polyethylene; and DQDJ-1868 manufactured by ENEOS NUC Corporation can be used as polyethylene vinyl acetate copolymer.

Also, a flame retardant for providing flame retardancy may be added to the resin foam to improve flame retardancy of the resin foam. In such the case, a predetermined amount of an antimony-based flame retardant, such as antimony trioxide, magnesium hydroxide, or aluminum hydroxide, a hydroxide-based flame retardant, or a bromine-based flame retardant can be added to 100 parts by mass of the resin. In addition to the above-mentioned antimony-based flame retardant, the hydroxide-based flame retardant, and the bromine-based flame retardant, inorganic fillers may also be added. Also, when providing heat resistance, carbon and titanium oxide may be further added within a predetermined range. In addition to the above, predetermined amounts of inorganic fillers, antioxidants, and stabilizers may be added as necessary.

For example, when adding a flame retardant, if an added amount of the flame retardant exceeds 100 parts by mass, effects may be saturated and foaming performance may be inhibited, and thus the added amount of the flame retardant is to be 100 parts by mass or less in total. Here, preferable added amounts of the antimony-based flame retardant and the bromine-based flame retardant are 20 parts by mass or less, respectively, and a preferable added amount of the hydroxide-based flame retardant is 80 parts by mass or less. Since all the flame retardants have a larger specific gravity than the resin component, when converted to a volume ratio, the mixing ratio relative to the resin component is significantly smaller than the mass ratio and thus there is no particular problem as long as the added amount is within the above range.

Here, a method for making the polyethylene-based resin foam will be described using low-density polyethylene as the base resin. Firstly, an organic decomposition type foaming agent and a crosslinking agent are mixed with low-density polyethylene as the base resin, which is then mixed and kneaded in a pressure kneader and pelletized to obtain pellets of a foaming resin composition. The pellets obtained in this way are fed into a hopper of a short-axis extruder and extruded through a die of a predetermined width to obtain a foaming base material sheet having a predetermined thickness.

Following the heating and extrusion of the foaming base material sheet, the resin foam is continuously heated in a heating furnace to be foamed to a predetermined foaming ratio and then passed through a roller for adjustment of dimensions and surface properties of the foam body, and cut to have a predetermined width according to a diameter of the pipe to be wrapped around.

The foaming ratio is to be controlled taking into consideration heat insulation performance and cushioning performance. Also, when embossing is performed, the too high foaming ratio makes it difficult to stably and evenly perform the embossing process after laminating the nonwoven fabric, whereas the too low foaming ratio makes the rigidity of the resin too high and desired embossing height cannot be obtained, which may deteriorate the heat insulation performance. Thus, the foaming ratio of the resin foam is preferably 20 to 40 times, and there is no particular problem as long as the foaming ratio is within such the range. Regarding the cushioning performance, there is no particular problem as long as the foaming ratio is within a range of 20 to 40 times. Also, although the thickness of the resin foam can be 15 mm or 20 mm, 10 mm thickness is usually used. This is because an increase in the thickness of the resin foam may cause deterioration in shaping performance, such as bending process of a heat exchanger pipe after attaching a cover member, or in workability during a piping operation due to an increase in the cross-sectional area of the product. Considering such the points, the resin foam having a thickness of 10 mm is often used as a cover member.

In the present embodiment, the nonwoven fabric is fixed by fusion or bonding onto one surface of the resin foam, and the other surface of the resin foam is wrapped around a refrigerant pipe for use. Although it is preferable that the resin foam and the refrigerant pipe are in contact with each other, another member may be interposed therebetween. By joining a nonwoven fabric to at least one surface of a polyethylene-based resin foam by fusion or bonding, a heat insulation material for drip prevention or drip suppression of dew condensation water of the present invention can be obtained.

(Nonwoven fabric and base fibers thereof (thermoplastic resin fibers))

In the present invention, as fiber of the nonwoven fabric, a predetermined amount of highly water absorbent resin fibers is mixed into thermoplastic resin fibers, which serves as the base fibers. Alternatively, a combination of a nonwoven fabric formed of only thermoplastic resin fibers and a nonwoven fabric formed by mixing highly water absorbent resin fibers to thermoplastic resin fibers at a predetermined mixing ratio may also be used. First, thermoplastic resin forming the base fibers will be described.

Thermoplastic resin fibers used for the nonwoven fabric formed of only the base fibers is aimed to provide a diffusion and transpiration functions. Thus, water absorption function is unnecessary. On the other hand, when used for the nonwoven fabric formed by mixing highly water absorbent resin fibers to thermoplastic resin fibers at a predetermined mixing ratio, thermoplastic resin fibers is used to form a skeleton of such the nonwoven fabric and to hold the highly water absorbent resin fibers. Thus, it is expected to provide the nonwoven fabric shape stability and predetermined strength, as well as to diffuse and evaporate water adsorbed to the surface of the nonwoven fabric due to surface tension. Thus, there is no need for the base fiber itself to be water absorbent. In the present invention, at least some of the thermoplastic resin fibers are fused or bonded with each other in the nonwoven fabric.

When mixed with highly water absorbent resin fibers for use, such thermoplastic resin fibers forms a skeletal structure of the nonwoven fabric. A role of the nonwoven fabric made only of thermoplastic resin fibers is that, as estimated from the results of the water retention parameter test described below, the thermoplastic resin fibers forming the skeletal structure acts on diffusion of water and water retention under gravity and to improve water absorption and diffusion through capillary action. However, to promote evaporation of water, it would be better if the water retention property of the nonwoven fabric is not too high, and thus it is preferable that water is retained through surface tension rather than by chemical bonding within the nonwoven fabric or by being absorbed into gel as in the case of highly water absorbent resin fibers. Also, if the thermoplastic resin fibers layer is disposed on an opposite side of the outer surface of the highly water absorbent resin fibers layer, the surface of the thermoplastic resin fibers layer is covered with the highly water absorbent resin fibers layer, and thus it is preferable that the thermoplastic resin fibers layer is used as an outer surface.

From such viewpoints, chemical synthetic fibers can be used as the fiber forming the nonwoven fabric. The thermoplastic resin fibers are used as the chemical synthetic fiber, and polyester-based fiber, polyethylene fiber, polypropylene fiber, acrylic fiber, etc. can be used. More specifically, examples include either mono-fiber of polypropylene (PP), polyethylene (PE), or polyethylene terephthalate (PET), or fiber of the above with a core-sheath structure (specifically, fiber of polyethylene terephthalate/polyethylene, polyethylene terephthalate/polypropylene, or polypropylene/polyethylene with a core-sheath structure), or fiber in which any of the above fiber is mixed with other fiber. Examples of such nonwoven fabric include the one in which at least some of the thermoplastic resin fibers are fused or bonded to one another. The other fiber includes acrylic resin.

Acrylic fibers are fibers made of a linear synthetic polymer containing 85% or more by mass of repeating units of acrylonitrile groups. Although the acrylic-base fibers slightly lose strength when absorbing moisture, wet/dry strength ratio thereof is 0.9 or higher, and the loss in strength is small compared to natural material based fiber such as rayon and vinylon. Thus, there is no significant problem when the acrylic fiber is used as a mixing fiber with other non-absorbent fiber.

As the thermoplastic resin fibers, other than mixing two types of fibers for use, the nonwoven fabric using fiber with a core-sheath structure can be used. Advantages for using such the fiber with the core-sheath structure for the nonwoven fabric are as follows. When fusing fibers to each other, for example, by using polyethylene terephthalate fiber or polypropylene fiber for a core and polyethylene fiber for a sheath, it is possible to fuse the fibers to each other at a relatively low temperature of 120 to 140°C. This can facilitate manufacture of the nonwoven fabric and, at the same time, increase rigidity of the fiber used for the nonwoven fabric by using stronger fiber for the core than the sheath, thereby reducing the fiber diameter of the fiber forming the nonwoven fabric.

A plurality of fibers having different melting points may be used as the thermoplastic resin fibers such that the fiber having a low melting point may be melted to be used as a binder to form the nonwoven fabric. Here, when PET fiber and polyethylene fiber are mixed and used at a predetermined ratio, polyethylene fiber acts as the binder. For example, PET resin may be used as the main constituent fiber, and copolymer polyester (Co-PET) resin, polypropylene resin, polyethylene resin, or the like may be used as the low-melting fiber serving as the binder. Using the above structure facilitates controlling of the strength etc. of the nonwoven fabric.

Here, the nonwoven fabric may be made of fiber having the core-sheath structure combined with other fibers having different melting points, as the thermoplastic resin fibers. For example, using fiber that is stronger than the fiber for the sheath for the core can increase the rigidity of the fiber used in the nonwoven fabric. At the same time, using high-strength fiber or hollow fiber as other fiber and controlling the mixing ratios of the two can improve mechanical properties of the nonwoven fabric and provide flexibility to the nonwoven fabric.

Also, when long fiber is used as the thermoplastic resin fibers, the fiber tends to be oriented in an MD direction, which is a main direction during manufacture of the nonwoven fabric, and as a result, mechanical properties in the MD direction tend to be more rigid than mechanical properties in a TD direction. Thus, when mixed with the highly water absorbent resin fibers to be used as the base fibers forming the skeleton, the skeletal structure is stabilized. Thus, it is preferable to use the long fiber. In addition to the long fiber, a predetermined amount of short fiber may be added to form a mixed fiber. Partially using the short fiber in this way can alleviate influence of fiber orientation in the MD direction and improve the orientation in the TD direction, and an improvement effect in anisotropy can be expected.

(Method for manufacturing nonwoven fabric using thermoplastic resin fibers)

Next, a method for manufacturing a nonwoven fabric using the thermoplastic resin fibers will be reviewed. Normally, a nonwoven fabric is formed by forming a thin membrane-like sheet called a membrane-like web made only of fibers, and then bonding each fiber that forms the formed web to each other only in the necessary parts as necessary.

There are various methods for forming a nonwoven fabric formed only of thermoplastic resin fibers. Examples of methods for forming the web include both wet and dry methods. In the wet method, fibers are made into a nonwoven fabric in a manner similar to that used in a paper making process. There are various methods, as described below, for forming the web in the dry method. Any method may be used to form the web. However, when applied for drip prevention or drip suppression of dew condensation water of the present invention where the long fiber is used, the fiber is to be bent to form a three-dimensional structure of the nonwoven fabric and thus it is preferable that the fiber of the nonwoven fabric can be bent and crimped.

Also, to obtain a nonwoven fabric from a web of thermoplastic resin fibers, fibers forming the web are to be bonded at predetermined positions. Here, examples of a method for bonding the web fibers include various methods such as chemical bonding methods including a dipping method and a spraying method, a thermal-bonding method, a spun-bonding method, a melt-blowing method, a melt-plaining method, an air-laying method, a spun-lacing method (a water-exchange method), and a needle-punching method. Here, methods for forming a nonwoven fabric using long fibers include the following chemical bonding methods, the thermal-bonding method, the spun-bonding method, the melt-blowing method, and the melt-plaining method. Methods for forming a nonwoven fabric using short fibers include the chemical bonding methods, the thermal-bonding method, the air-laying method, and the needle-punching method. Note that the chemical bonding methods, the thermal-bonding method, the air-laying method, etc. can be used for both long and short fibers.

To explain each method specifically, the chemical bonding method is a method in which the web is partially bonded by an adhesive, and a thermal-bonding method is a method in which heat-fusible fibers with low melting points are mixed and passed between heat rolls to be thermally compressed and bonded or hot air is applied and the heated parts of the fibers are bonded with the melting fibers, thereby bonding the fibers together. The spun-bonding method is a method in which fibers are arranged being directly connected to a spinning and then self-fused to foam a fabric. The melt-blowing method is a method in which fibers are arranged being directly connected to a spinning and then extremely thin fibers are entangled. The melt-plaining method is a method in which resin is melted and fibers are thinned by spraying high-temperature air from around a spinning nozzle and accumulated into a sheet.

The air-laying method is a method of bonding pulp with air and a binder to form a nonwoven fabric. Also, the spun-lacing method is a method of entangling fibers using high-pressure water jets. The needle-punching method is a method of manufacturing a nonwoven fabric by repeatedly piercing a web with a special needle that moves up and down at high speed, entangling fibers with protrusions formed on the needle. When laminating a nonwoven fabric, there is no particular limitation to a method for laminating. However, when laminating the first and second layers, since the second layer contains the highly water absorbent resin fibers at a predetermined ratio, the dry methods such as the spun-lacing method are not preferred, and it is preferable that the layers are laminated using either the thermal-bonding method, chemical bonding method, or needle-punching method. However, the present invention does not limit the method for producing the nonwoven fabric or the laminate thereof. Also, although a carding machine is usually used to mix different fibers, any other known method other than the wet methods can be used.

(Highly water absorbent resin fibers)

Highly water absorbent resin has high water absorbency and has an effect of retaining absorbed water in a gel structure where polymers are cross-linked. At the same time, the highly water absorbent resin also has an equilibrium water absorption rate, meaning that the resin absorbs moisture under high humidity conditions and releases moisture under low humidity conditions. Examples of highly water absorbent resin fibers include cross-linked acrylate fiber, fiber obtained by hydrolyzing the surface of acrylic fiber through post processing, and fiber obtained by graft polymerizing acrylic acid or methacrylic acid onto polyester fiber. Among the above, the cross-linked acrylate fiber is particularly preferred because of high water absorbency thereof.

Water absorbing action of highly water absorbent polymers will be described using polyvinyl alcohol and polyacrylic acid as examples. The polyvinyl alcohol/ polyacrylic acid highly water absorbent polymer has a structure in which an island of sodium polyacrylate exists in a sea of polyvinyl alcohol, and crystallized polyvinyl alcohol acts as a cross-linking point for the sodium polyacrylate. Such the highly water absorbent polymer is formed of two layers, a polyvinyl alcohol-rich portion and a polyacrylic acid portion, and has a microphase-separated structure in which the former encompasses the latter.

Also, although the polyvinyl alcohol phase exhibits some water expandability, water absorption is mainly by the polyacrylic acid phase, and the vinyl alcohol phase is stretched when expanded to several hundred times the size of the polyacrylic phase, undergoing so-called oriented crystallization.

Here, strength of the crystallized polyvinyl alcohol is very high, belonging to the toughest class of polymers. Thus, the polyvinyl alcohol/ polyacrylic acid highly water absorbent polymer exhibits a composite structure in which the crystallized polyvinyl alcohol supports the polyacrylic acid portion in a highly water absorbent state, resulting in a gel that exhibits rigidity even in a water absorbent state.

Here, "water absorbent fiber", which is compared with the highly water absorbent resin fibers, will be described. Although the water absorbent fiber such as cellulose fiber, pulp, and rayon fiber have water absorbency, compared to the nonwoven fabric using the highly water absorbent resin fibers, the water absorbency thereof is not as to exceed own weight of the fiber. Thus, the water absorbent fiber is inferior to the fiber using the highly water absorbent resin fibers in both absorbency and water retention property. Conversely, the highly water absorbent resin fibers can be defined as the fiber or an assembly of fiber that exhibits water absorbency exceeding its own weight. It is preferable that the highly water absorbent resin fibers absorbs water of two times its own weight or more, more preferably five times its own weight or more, or even more preferably ten times of its own weight or more.

The highly water absorbent resin fibers is formed of resin that has excellent water absorbency and expands upon absorbing water. Fibers including polymers having hydrophilic groups are preferably used and a typical example of the fiber including polymers having hydrophilic groups is cross-linked acrylic acid-based fiber. Such the cross-linked acrylate fiber can be obtained by reacting an acrylic acid monomer with a monomer having a functional group capable of forming a cross link with the acrylic acid monomer, to obtain a polymer, which is then subjected to a cross-linking treatment. Such monomers may be used alone or a plurality of types thereof may be combined. However, it is preferable that an amount of the functional group in the acrylic acid monomer and the functional group monomer is set to be equal to or less than the equivalent amount of the acrylic acid. And, when the acrylic acid monomer and the functional group monomer are reacted, other vinyl monomers such as vinyl acetate (VA) and acrylonitrile may be compounded to provide plasticity.

Typical examples of suitable commercially available cross-linked acid fiber include "Bell Oasis" (registered trademark) manufactured by Teijin Fibers Ltd. and "LANSEAL" (registered trademark) manufactured by TOYOBO Co., Ltd. For example, the above-mentioned "Bell Oasis" (registered trademark) exhibits excellent water absorbency, which is capable of absorb water up to 80 times its own weight. Here, in the case of short fiber nonwoven fabric, the web of the highly water absorbent resin fibers is mainly formed by an air-laid method or a carding method, and the thermal bonding method or the chemical bonding method is used for bonding the fibers forming the web to each other. However, in some cases, the needle-punching method can be used for the manufacture.

(Method for attaching nonwoven fabric to polyethylene-based resin foam)

Although there is no particular limitation to a method for joining the nonwoven fabric and resin foam, to fuse or bond together the nonwoven fabric and polyethylene-based resin foam, the nonwoven fabric may be disposed on one surface of the resin foam and then subjected to heat roll molding, for example. Alternatively, an adhesive is applied to the one surface of the polyethylene-based resin foam and the nonwoven fabric is then disposed on the polyethylene-based resin foam in such the state, which is then subjected to heat roll molding, thereby fixing the nonwoven fabric to the surface of the polyethylene-based resin foam.

(Piping structure)

The heat insulation cover member 5 for drip prevention or drip suppression of dew condensation water according to the preferred embodiments of the present invention described above forms a piping structure including at least any one of horizontal piping, diagonal piping, vertical piping, and bent piping, which covers an outer periphery of the refrigerant pipe 1 (see FIG. 1A and FIG. 1B). At this time, with the surface of a single layer of nonwoven fabric, or the surface of either the first layer or second layer of a laminated nonwoven fabric, of the heat insulation cover member for drip prevention or drip suppression of dew condensation water being the outer surface, the refrigerant pipe is covered with each heat insulation cover member (see FIG. 3). Alternatively, the insulation cover member 5 for drip prevention or drip suppression of dew condensation water covers the outer periphery of each of the pipes 1 and 1 of the twin refrigerant pipes 1, and the heat insulation cover members 5 are heat fused or bonded to each other to form the piping structure 20 having a figure-eight cross section (see FIG. 2A and FIG. 2B). At this time, in the piping structure including at least any one of horizontal piping, diagonal piping, vertical piping, and bent piping, with the surface of a single layer of nonwoven fabric, or the surface of either the first layer or second layer of a laminated nonwoven fabric, of the heat insulation cover member for drip prevention or drip suppression of dew condensation water being the outer surface, each refrigerant pipe of the piping structure is covered with each heat insulation cover member. By facing such the refrigerant pipes each other and heat fusing or bonding the outer surfaces of the nonwoven fabrics, the two pipes are integrated into the structure having the figure-eight cross section. Alternatively, in the piping structure 30 (see FIG. 3, FIG. 5A, and FIG. 5B), which is another embodiment, the nonwoven fabric has a laminated structure and is disposed on the resin foam 2 with either the surface of the second layer (the layer including the highly water absorbent resin fibers) 32 or the surface of the first layer (the layer not including the highly water absorbent resin fibers) 31 being the outer surface, forming the heat insulation cover member 5 that covers the refrigerant pipe 1. In a test to confirm dripping of dew condensation water using vertical piping, which will be described below, compared to the horizontal piping, diagonal piping, and bent piping, the vertical piping is most susceptible to effects of gravity. In addition, in terms of piping structure, dew condensation water is more likely to be retained in a recess in proximity of the joined portion of the twin-pipe type piping than in the single-pipe type piping, and such the retained dew condensation water is more likely to turn into droplets and drip, making the test conditions more severe. Thus, the test to confirm dripping of dew condensation water was conducted by arranging the twin-pipe type piping in vertical piping

FIG. 6 is a cross-sectional view showing schematically a piping structure 40 (collective piping) according to yet another preferred embodiment of the present invention. In the present embodiment, the two refrigerant pipes 1 each having the resin foam 2 being arranged, a drain pipe 12, and a wiring piping 13 are housed inside the heat insulation cover member 5 for drip prevention or drip suppression of dew condensation water of the present invention. At this time, the piping structure preferably includes any one of the horizontal piping, diagonal piping, vertical piping, and bent piping, in which one or more refrigerant pipes, the drain pipe, and the wiring pipe are housed inside the heat insulation cover member 5 for drip prevention or drip suppression of dew condensation water. Furthermore, at this time, in the present embodiment, with the surface of the single-layered nonwoven fabric, or the surface of either the first layer or second layer of the laminated nonwoven fabric being the outer surface, an outer periphery surface shape of the heat insulation cover member for drip prevention or drip suppression of dew condensation water is to have an approximately cylindrical cross section. There is an example of a form for housing inside, in which, to house the refrigerant pipe, drain pipe, and wiring inside the heat insulation cover member for drip prevention or drip suppression of dew condensation water, the heat insulation cover member encloses the refrigerant pipe, drain pipe, and wiring. In this way, even when dew condensation water occurs on the outer surface of the heat insulation cover member 5 for drip prevention or drip suppression of dew condensation water, which is the outermost surface of the piping structure 40, dripping of dew condensation water can be suitably suppressed or prevented.

Although piping structures for heat exchange devices have been described above, the cover member of the present invention is not limited to piping for heat exchange devices and can also be used as a structure in which polyethylene-based resin foam surface is attached to an outside of a duct for a heat exchange device so as to cover an outer periphery surface of the duct and the cover member is attached around the outer periphery of the duct. Even when the cover member of the present invention is attached around the outer periphery of the duct to be used as a duct structure in this way, the same effects of drip prevention or drip suppression of dew condensation water on the duct surface as in the case of heat exchange piping can be expected.

WORKING EXAMPLES

(Method for measuring product characteristics and basic physical properties of nonwoven fabric)

(Thickness of nonwoven fabric)

Nonwoven fabrics having thicknesses of 0.66 mm to 1.22 mm were used in tests. The thicknesses of the nonwoven fabrics used in the tests were measured based on the JIS method using a nonwoven fabric thickness measuring device (a $\varphi$56.4mm disc flat probe) capable of performing the same measurement as Method A of the measurement method described in JIS general nonwoven fabric measurement method (JIS L1913:2010). The thickness of the nonwoven fabric was measured three times and the average value was used as the measured value. When the laminated nonwoven fabric is peeled off, the nonwoven fabric is deformed and it is impossible to maintain the thickness of the first layer at the time of lamination. Thus, the test piece was cut with a fine cutter, and a cross section of the nonwoven fabric in a thickness direction was observed with an SEM and the thickness was measured by comparing with the scale in the SEM. Three test pieces were prepared for the measurement, and the measurement results for the three pieces were taken as the thickness of the first layer of the nonwoven fabric. The thickness of the second layer was found by subtracting the thickness of the first layer from the total thickness of the nonwoven fabric.

(Fiber diameter and basis weight)

The fiber diameter of the nonwoven fabric was found by randomly selecting 20 points from an SEM fiber image and calculating the average fiber diameter (number average) using image processing software. Here, the average fiber diameter of the nonwoven fabrics used in the present invention is 16.67 μm to 35.25 μm. The basis weight can be found by cutting out 10 cm × 10 cm square test pieces from a raw material, measuring the mass and area of each piece, and using the following formula. The measurement was repeated three times and the average value thereof was taken as the basis weight.

$$\text{Basis weight (g/m}^2\text{)} = 10000 \times \text{test piece mass (g) / test piece area (cm}^2\text{)}$$

(Water retention parameter: FIG. 7)

When water condenses on the surface of the nonwoven fabric, diffusion due to surface tension competes with absorption of water. Thus, to prevent dew condensation water from dripping under gravity in particular, absorption and diffusion ability to absorb water upward against gravity is important, and balance between such functions is an issue. For evaluation thereof, in the present invention, a unique test method has been developed and offered to determine water retention parameters including water absorption ability under gravity.

Here, in the water retention parameter test, strip-shaped test pieces made of nonwoven fabrics including highly water absorbent resin fibers and the like at various mixing ratios, each having a predetermined size and a gauge line across the width of the surface at the midpoint in the longitudinal direction thereof, were prepared, and, with the test piece being held horizontally, a predetermined amount of colored test liquid was dripped onto the gauge line, and then immediately after dripping, the test piece was held vertically and held for five minutes. Thereafter, ascending distance from the gauge line to a point where the test liquid reached upward on the test piece and descending distance from the gauge line to a point where the test liquid reached downward on the test piece were measured, and the average ascending distance was divided by the average descending distance, and the ratio was used as the water retention parameter.

This value represents the ratio of ascending and descending lengths, and the larger the value, the better the "retention ability to retain water against gravity". If such the water retention ability is high, it can be considered that drip of dew condensation water at low positions can be suppressed.

For the water retention parameter, the nonwoven fabric produced for working examples and comparison examples (including, as necessary, the highly water absorbent resin fibers or the like at various mixing ratios used in the working examples and comparison examples) were made into strip-shaped test pieces 41 each having dimensions of 200 mm in length and 25 mm in width (FIG. 7), and a gauge line 45 is provided on the surface across the width of the surface at the midpoint in the longitudinal direction thereof. At this time, the thickness of the nonwoven fabric was the same as that of each test material used in the working examples and the comparison examples. With the above test piece held horizontally, 400 μL of the colored test liquid is dripped onto the gauge line and then immediately after dripping, the test piece 41 was held vertically and held for five minutes. Thereafter, ascending distance 43 from the gauge line to a point where the test liquid reached upward on the test piece and descending distance 44 from the gauge line to a point where the test liquid reached downward on the test piece were measured.

Furthermore, the average value (an average value of the ascending distance of #1 to #5) of the ascending distance (the ascending distance to the point the test liquid reached upward) 43 of the test piece in a width direction of the test piece was divided by the average value (an average value of the descending distance of #1 to #5) of the descending distance (the descending distance to the point the test liquid reached downward) 44 of the test piece in the width direction of the test piece, and the ratio of the average ascending distance divided by the average descending distance was used as the water retention parameter. Since there is a distribution in the width direction as shown in FIG. 7, measurement positions were determined by equally dividing the width direction and an average value of the five locations are found. Then, a value found by dividing an average upward length (mm) by an average downward length (mm) was defined as the water retention parameter against gravity. The measurement values in the table are the average values obtained by repeating such the measurement five times.

This value represents a ratio of an ascending portion 43 to a descending portion 44, and the larger the value means the better the "water retention ability for retaining water against gravity". If such the water retention ability is high, it can be considered that drip of dew condensation water at low positions can be suppressed.

Thus, regarding performance of drip prevention or drip suppression of dew condensation water, it is preferable that the water retention parameter is large. However, in reality, it is considered that, for drip prevention or suppression of dew condensation water, in addition to water retention parameter, the water retention capacity of the nonwoven fabric has a complementary effect.

(Evaluation on water retention capacity under evaporative environment: FIG. 8A and FIG. 8B)

In the present invention, taking into consideration water retention function by the nonwoven fabric including highly water absorbent resin fibers, in addition to the above-mentioned water retention parameter test, it is necessary to find water retention capacity under an evaporative environment. However, since there are no test standards for determining water retention capacity, the following water retention property test under an evaporative environment was devised and conducted.

A method for evaluating water retention property is as follows (see FIG. 8A and FIG. 8B). First, the heat insulation cover member 5 formed of the resin foam 2 and the nonwoven fabric 3 was wrapped around an outer periphery of a pipe 11 that has a diameter of 25 mm and has been cut into 150 mm in length. Then, both end portions of the heat insulation cover member 5 were fused to make a water retention property test material 100. The thickness of the resin foam 2 at this time was 10 mm. The nonwoven fabric had the same thickness as each test material made in the working examples, comparison examples, and conventional example 1, and, if necessary, the nonwoven fabric included the same proportion of the mixing ratio of the highly water absorbent resin fibers as each test material. Next, as shown in the drawing, the test material 100 was placed inside a container 51 made of transparent resin having a predetermined clearance, into which the test material having the 150 mm length can be inserted, and "mass weight of the container + the test material" was measured using an electronic balance (scale) 53. Then, 20 g of water 52 was poured into the container 51 containing the test material 100 therein and a total mass weight of "mass weight of the container + the test material + 20 g of water" was measured using the electronic balance. A constant-temperature-and-humidity chamber was set at the temperature of 23°C and humidity of 30%, and the container containing the water 52 and the test material 100 was inserted into the constant-temperature-and-humidity chamber and kept therein for six hours. After six hours had elapsed, the container 51 in which the test material 100 was immersed was taken out and "mass when taken out", "remaining water amount", and "mass after water removal" were measured using the electronic balance 53. Here, the water retention capacity can be found by tilting the container to remove the water from the "mass when taken out" at the end of the test to find the "mass after water removal", and subtracting mass of the container and the sample before the test. An amount of evaporation is a value found by subtracting the "mass when taken out" from the total mass before starting the test.

(Specifications of test materials, water retention parameters, and test results of water retention property tests)

The test results of the test materials are shown in Table 1.

[Table 1]

| Test Material | No. | Structure of Heat Insulation Cover Member | Presence of SAF in Nonwoven Fabric | Structure of Layer for Promotion of Diffusion and Transpiration | Mixing Ratio of SAF in Nonwoven Fabric Layer Containing SAF (%) | Fiber Diameter [μm] | Product Thickness [mm] | Basis Weight [g/m2] | Water Retention Parameter | Water Retention Property [g] | Satisfying thresholds of both water retention parameter and water retention property |
|---|---|---|---|---|---|---|---|---|---|---|---|
| Conventional Example Material: Film | 1 | PE Film Only | No SAF | | PE Film | | | | | | - |
| Inventive Example Material: Single-Layer Products | 1 | foam + single-layer nonwoven fabric | With SAF | None | PET/PE + Bell Oasis 10% | Base Material: 16.67 SAF:35.25 | 1.22 | 145 | 0.78 | 7.89 | Good |
| | 2 | foam + single-layer nonwoven fabric | With SAF | None | PET/PE + Bell Oasis 25% | Base Material: 16.67 SAF:35.25 | 0.77 | 130 | 0.84 | 8.95 | Good |
| | 3 | foam + single-layer nonwoven fabric | With SAF | None | PET/PE + Bell Oasis 40% | Base Material: 16.67 SAF: 35.25 | 0.82 | 130 | 1.03 | 15.70 | Good |
| | 4 | foam + single-layer nonwoven fabric | With SAF | None | PET/PE + Bell Oasis 75% | Base Material: 16.67 SAF:35.25 | 0.92 | 130 | 1.06 | 19.98 | Good |
| | 5 | foam + single-layer nonwoven fabric | With SAF | None | PET 30% +PP/PE 20% + LANSEAL 50% | PET:25.41 PP/PE:24.89 SAF:23.74 | 0.78 | 120 | 0.98 | 9.86 | Good |
| Inventive Example Material: Laminated Products | 6 | foam + laminated nonwoven fabric | With SAF | PET/PE | PET/PE + Bell Oasis 10% | Base Material:16.67 SAF:35.25 | 0.89 (0.25) | 48 (18/30) | 1.02 / 0.74 | 7.22 / 7.58 | Good |

| Test Material | No. | Structure of Heat Insulation Cover Member | Presence of SAF in Nonwoven Fabric | Structure of Layer for Promotion of Diffusion and Transpiration | Mixing Ratio of SAF in Nonwoven Fabric Layer Containing SAF (%) | Fiber Diameter [μm] | Product Thickness [mm] | Basis Weight [g/m2] | Water Retention Parameter | Water Retention Property [g] | Satisfying thresholds of both water retention parameter and water retention property |
|---|---|---|---|---|---|---|---|---|---|---|---|
| | 7 | foam + laminated nonwoven fabric | With SAF | PET/PE | PET/PE + Bell Oasis 25% | Base Material:16.67 SAF:35.25 | 0.92 (0.25) | 48 (18/30) | 1.06 0.78 | 7.45 7.62 | Good |
| | 8 | foam + laminated nonwoven fabric | With SAF | PET/PE | PET/PE + Bell Oasis 40% | Base Material: 16.67 SAF: 35.25 | 1.01 (0.25) | 48 (18/30) | 1.10 0.89 | 9.73 9.87 | Good |
| | 9 | foam + laminated nonwoven fabric | With SAF | PET/PE | PET/PE + Bell Oasis 75% | Base Material:16.67 SAF:35.25 | 0.86 (0.25) | 48 (18/30) | 1.14 0.94 | 13.31 13.77 | Good |
| | 10 | foam + laminated nonwoven fabric | With SAF | PET/PE | PET/PE + Bell Oasis 40% | Base Material:16.67 SAF:35.25 | 1.05 (0.25) | 63 (18/45) | 1.16 0.98 | 11.92 12.05 | Good |
| | 11 | foam + laminated nonwoven fabric | With SAF | PET/PE | PET 30% +PP/PE 20% + LANSEAL 50% | PET:25.41 PP/PE:24.89 SAF:23.74 | 1.22 (0.25) | 168 (18/150) | 1.10 0.94 | 15.88 16.45 | Good |
| Comparison Example Material | 1 | foam + single-layer nonwoven fabric | With SAF | None | PET/PE + Bell Oasis 5% | Base Material: 16.67 SAF:35.25 | 0.66 | 48 | 0.72 | 6.48 | Bad |
| | 2 | foam + laminated nonwoven fabric | With SAF | PET/PE | PET/PE + Bell Oasis 5% | Base Material: 16.67 SAF:35.25 | 0.63 (0.25) | 48 (18/30) | 0.86 0.72 | 6.27 6.33 | Bad |

EP 4 751 904 A1

23

(continued)

| Test Material | No. | Structure of Heat Insulation Cover Member | Presence of SAF in Nonwoven Fabric | Structure of Layer for Promotion of Diffusion and Transpiration | Mixing Ratio of SAF in Nonwoven Fabric Layer Containing SAF (%) | Fiber Diameter [μm] | Product Thickness [mm] | Basis Weight [g/m2] | Water Retention Parameter | Water Retention Property [g] | Satisfying thresholds of both water retention parameter and water retention property |
|---|---|---|---|---|---|---|---|---|---|---|---|
| | 3 | foam + laminated nonwoven fabric | With SAF | PET/PE | PET/PE + Bell Oasis 85% | Base Material: 16.67 SAF:35.25 | 0.75 (0.25) | 48 (18/30) | 1.16 0.96 | 17.62 16.97 | Good |
| | 4 | foam + single-layer nonwoven fabric | With SAF | None | PET/PE (sheath treated to be hydrophilic) | Base Material: 18.9 | 0.52 | 40 | 0.90 | 6.83 | Bad |
| | 5 | foam + single-layer nonwoven fabric | With SAF | None | PE + rayon 40% | Base Material:17.43 | 1.12 | 50 | 0.62 | 11.02 | Bad |
| | 6 | foam + single-layer nonwoven fabric | With SAF | None | PET/PE + pulp 30% | Base Material: 18.87 | 1.13 | 70.2 | 0.97 | 6.81 | Bad |

(Table Notes)
SAF: Super Absorbent Fiber (highly water absorbent resin fibers);
Bell Oasis (product name) manufactured by Teijin Frontier Co., Ltd.;
LANSEAL (product name) manufactured by TOYOBO Co., Ltd.;
PE: polyethylene;
PET: polyethylene terephthalate;
Foam: polyethylene resin foam with foaming ratio of 30 times and thickness of 10 mm;

Numerical values indicated by "Mixing Ratio of SAF (%)" or by "%" all refer to "% by mass"; and

Those that satisfied both threshold values of the water retention parameter and water retention property were passed and marked as "Good", and those did not satisfy the above were failed and marked as "Bad".

(Explanation of test materials)

Hereinafter, test materials will be explained below. Names of resin forming the fibers will be abbreviated to PE, PP, PET, SAF, etc. for simplicity in the explanation of the test materials as well as in the descriptions of the evaluation test results of such the test materials. The mixing ratio in the present invention refers to the mixing ratio of the highly water absorbent resin fibers to the total weight of the layer containing the highly water absorbent resin fibers.

Firstly, manufacture of a resin foam will be described.

As polyethylene-based resin, mixed resin in which low-density polyethylene and high-density polyethylene were mixed in a mass ratio of 4:6 was prepared. F120N manufactured by Ube-Maruzen Polyethylene Co, Ltd. was used as the low-density polyethylene and HD 1300 manufactured by Japan Polyethylene Corporation was used as the high-density polyethylene. Furthermore, 16 parts by mass of vinyfor AC#LQ (product name) manufactured by EIWA CHEMICAL IND. CO., LTD. was added as a foaming agent, and 0.8 parts by mass of PERCUMYL D (product name) manufactured by Nippon Oil & Fats Co., Ltd. was added as a crosslinking agent. The resulting raw material composition was extruded at 120 to 150°C to obtain a foaming base sheet, which was then continuously expanded in a heating furnace at 200 to 230°C to a thickness of 10 mm and a foaming ratio of 30 times. The resin foam was then passed through rolls to adjust its dimensions and surface properties, and then cut to a predetermined width according to a diameter of a pipe to be wrapped around. Although the resin foam is usually 10 mm thick, the thickness may be larger than 10 mm as necessary. This is because increasing the thickness of the foam improves heat insulation and facilitates suppression of condensation while the foaming ratio is approximately the same.

Inventive example materials include a single-layer product formed of a single-layer nonwoven fabric, in which thermoplastic resin fibers and highly water absorbent resin fibers are mixed at a predetermined mixing ratio, and a laminated product, in which the single-layer product is laminated with a skeletal resin fiber layer including no highly water absorbent resin fibers. The single-layer product was prepared by adding the highly water absorbent resin fibers (Bell Oasis) at various predetermined ratios to a core-sheath structure fiber, which is the skeletal resin, in which PET of PET/PE was used for the core and PE of PET/PE was used for the sheath, which is then heat fused onto a surface of a polyethylene resin foam. In the working examples, test materials 1, 2, 3, and 4 have the mixing ratios of 10% by mass, 25% by mass, 40% by mass, 75% by mass, respectively, which are content ratios of the highly water absorbent resin fibers to the nonwoven fabric layer containing the highly water absorbent resin fibers in the case of a single layer. Here, although being a single-layer product, an inventive example material 5 includes the core-sheath structure fiber of PET and PP/PE as the skeletal resin fiber, and 50% by mass of LANSEAL instead of Bell Oasis as the highly water absorbent resin fibers. In the table, 30%, 20%, and 50% under the item of mixing ratio (%) of SAF of the test material 5 represent the mixing ratios as described above, indicating 30% by mass, 20% by mass, and 50% by mass, respectively.

In contrast, in the laminated products, the above-mentioned single-layer nonwoven fabric is laminated with a nonwoven fabric that is formed only of a skeletal resin fiber layer. Here, the layer formed only of the skeletal resin fiber is referred to as the first layer, and the nonwoven fabric layer including highly water absorbent resin of the nonwoven fabric of a laminated structure is referred to as the second layer.

The mixing ratio of the second layer, which is the nonwoven fabric including the highly water absorbent resin fibers, in the nonwoven fabric of the laminated product is similar to that of the single-layer product, with mixing ratios of 10% by mass, 25% by mass, 40% by mass, and 75% by mass, respectively, and inventive example materials 6, 7, 8, and 9 were prepared by attaching the first layer, which is formed of only the skeletal structure nonwoven fabric with the core-sheath structure of PET/PE, to the respective second layer. In an inventive example material 10, although the mixing ratio of the second layer, which is the nonwoven fabric including the highly water absorbent resin fibers in the nonwoven fabric of the laminated product, is 40% by mass and is similar to the inventive example material 8, the basis weight of the nonwoven fabric is increased to 63 g/m$^2$, from 48 g/m$^2$ of the inventive example material 8.

In an inventive example material 11, mixed fibers of PET and PET/PP core-sheath structure fiber is used as the skeletal resin fiber, LANSEAL instead of Bell Oasis is added with the mixing ratio of 50% by mass, and, furthermore, the basis weight of the nonwoven fabric is increased to 168 g/m$^2$.

The arrangement of the nonwoven fabrics in each laminated product were evaluated in two cases: with the first layer (not including the highly water absorbent resin fibers) as the outer layer and the second layer (including the highly water absorbent resin fibers) as the inner layer (an arrangement A), and, as an inverted arrangement, with the first layer (not including the highly water absorbent resin fibers) as the inner layer and the second layer (including the highly water absorbent resin fibers) as the outer layer (an arrangement B).

As a conventional example material, a conventional example material 1 is a heat insulation cover member in which a PE film (manufactured by our company) having a thickness of 100 $\mu$m is fused onto a surface of a polyethylene resin foam. As comparison example materials with the same structures as the inventive example materials, a nonwoven fabric of a single-layer product with 5% by mass mixing ratio of highly water absorbent resin (Bell Oasis), and laminated products with 5% by mass and 85% by mass of mixing ratios of the above-mentioned Bell Oasis were prepared as comparison example materials 1, 2, and 3, respectively.

Here, the comparison example materials are for checking whether or not the both single-layer product and laminated product even with the small mixing ratio of 5% by mass have the effects of prevention or suppression of condensation. Also, even with sufficient prevention or suppression effects for condensation due to a lot of highly water absorbent nonwoven fabrics, the one with the mixing ratio of 85% by mass is for checking whether there are problems or not in fusion performance with polyethylene foam or foaming properties. In addition, for the comparison example material with the higher mixing ratio, it was thought that the single-layer product and the laminated product would show similar behavior, and thus only the laminated product was checked. Furthermore, three types of commonly used nonwoven fabrics formed only of skeletal resin fiber resin, with no highly water absorbent resin, were added in the comparison materials, designated as comparison example materials 4 to 6. Here, the nonwoven fabrics of the comparison examples 5 and 6 were prepared by adding not only skeletal resin fibers but also ordinary thermoplastic resin fibers, as well as water absorbent fibers or water absorbent materials, such as pulp and rayon, so as to compare the ordinary water absorbent fibers and water absorbent materials with the highly water absorbent resin fibers. Specifically, the comparison example material 4 has a nonwoven fabric with a core-sheath structure of PET/PE, in which the surface of the PE in the sheath was treated to be hydrophilic. Also, the comparison example material 5 has a nonwoven fabric made of mixed fiber of PE fiber and rayon fiber, with the rayon fiber content being 40% by mass. Furthermore, the comparison example material 6 has a nonwoven fabric made of a mixture of PET/PE core-sheath structure fiber and pulp fiber, with a pulp content of 30% by mass.

(Measurement and evaluation items for nonwoven fabrics and details thereof)

The measurement and evaluation items for the nonwoven fabrics used in the tests are fiber diameters, product thickness, basis weight, water retention parameters, and water retention property. Here, the fiber diameters of the test materials include both the fiber diameter of base material skeletal resin fiber and fiber diameter of highly water absorbent resin fibers (SAF). When the nonwoven fabric is a single layer, the product thickness is the total thickness of the nonwoven fabric. When the nonwoven fabric is a laminated product, in addition to the total thickness of the laminated nonwoven fabric, the thickness of the first layer, which is a diffusion layer, is also listed in parentheses below the total thickness. For this reason, since the thickness of the second layer can be found by subtracting the thickness of the first layer from the total thickness as mentioned above, the thickness of the second layer is not shown in the table. Also, the basis weight of the single-layer product is the basis weight of the entire nonwoven fabric. In a case of the laminated product, the basis weight of the entire nonwoven fabric is written in the upper row and the basis weight of the first layer and the basis weight of second layer are written in the lower row from left to right in order.

This is because there are two cases: (A) the first layer is disposed on the outside and the second layer is disposed on the inside; and (B) the second layer is disposed on the outside and the first layer is disposed on the side of the fused or bonded surface, which is on the inside. Here, it can be thought that disposing the first layer formed only of skeletal resin fibers, without any highly water absorbent resin fibers, on the outside of the nonwoven fabric would have a more advantageous effect of the first layer as a diffusion evaporation layer. However, some moisture may pass the highly water absorbent resin layer, and considering only the water retention property, it can also be thought that the inverted arrangement, in which the diffusion layer is disposed on the inner fused or bonded layer side, is superior to the case in which the highly water absorbent resin fibers are disposed on the outside, and thus both arrangements were evaluated.

Hereinafter, regarding the arrangement in the laminated product, as arrangements of each layer of the nonwoven fabric that is to be attached to a surface of a PE resin foam, an arrangement in which the first layer that is a nonwoven fabric formed only of the base skeletal resin is disposed as an outer layer will be referred to as an arrangement (A) (FIG. 5A), and an arrangement in which the second layer including highly water absorbent resin fibers is disposed as an outer layer will be referred to as an arrangement (B) (FIG. 5B).

For the water retention parameters and water retention capacity in Table 1, the upper rows show the test results for the arrangement (A) with the first layer as the outer layer, and the lower rows show the test results for the arrangement (B) with the second layer as the outer layer.

Also, the mixing ratio was defined as the mixing ratio of the highly water absorbent resin fibers to the total weight of the layer containing the highly water absorbent resin, as mentioned above.

(Fiber diameter, product thickness, range of basis weight)

The fiber diameters of thermoplastic resin fibers tested in the working examples were 16.67 $\mu$m to 25.41 $\mu$m. The fiber diameters of SAF tested in the working examples were 23.74 $\mu$m to 35.25 $\mu$m. Specifically, the fiber diameter of SAF, which are the highly water absorbent resin fibers, were 35.25 μm for Bell Oasis and 23.74 μm for LANSEAL, in which LANSEAL has a core-sheath structure with SAF formed on an outer periphery of a core material made of acrylic fiber.

The product thickness was test in a range of 0.77 mm to 1.22 mm in the working examples. For the laminated products, the thickness of the first layer (the layer without SAF) is shown in parentheses as described above. In the working examples, the basis weight tested was between 38 g/m$^2$ and 168 g/m$^2$. In the case of the laminated products, as mentioned above, the basis weight of the entire nonwoven fabric is shown in the upper row, and the basis weight of the first layer (the layer without SAF) is shown on the left side of the lower row and the basis weight of the second layer (the layer with SAF) is shown on the right side of the lower row in order.

(Results of tests on water retention parameter and water retention property of nonwoven fabric)

• Test results for the inventive example materials:

Looking at the results for the inventive example materials, the test results for single-layer products of the inventive example materials 1 to 5 are 0.78 to 1.06 for the water retention parameters, and 7.89 g to 19.98 g for the water retention capacity in the water retention property test.

Also, since the inventive example materials 6 to 9 are laminated products, the results differ if the layer surface onto which the test liquid is dropped in the water retention property test is the first layer (the diffusion and transpiration promoting layer made only of base resin fiber) or the second layer (the layer in which the base resin fibers includes the highly water absorbent resin fibers). In the present test, the dripping surface corresponds to an outer surface of the heat insulation cover member of the product.

Regarding the water retention parameters, when the dripping surface is the second layer, in which the base resin fiber includes the highly water absorbent resin fibers, the water retention parameters are 0.74 to 0.98, showing results that are similar to the test results for the single-layer products. The reason for this is thought to be that the structure of the nonwoven fabric of the second layer, which is the dripping surface, includes the highly water absorbent resin fibers in the base resin fiber and has a structure similar to that of the single-layer product, and thus, when the mixing ratio of the highly water absorbent resin fibers is the same, behaviors of diffusion, evaporation, and the water retention property of water absorbed by the nonwoven fabric are almost similar. Conversely, when the first layer is not disposed as the dripping surface but disposed on a back surface of the nonwoven fabric layer including the highly water absorbent resin fibers, the first layer, which is a diffusion/transpiration promotion layer made only of the base resin fiber without including the highly water absorbent resin fibers, has little effect on the water retention parameters.

Conversely, if the dripping surface is the first layer that is a diffusion/transpiration promotion layer made only of the base resin fiber, the water retention parameters are 1.02 to 1.16, which are larger than the water retention parameters of 0.74 to 0.98 in the cases in which the second layer is the dripping surface. From this, in terms of arrangement relationships between the nonwoven fabric and the resin foam, and from viewpoints of diffusion and transpiration performance, it can be seen that it is preferable that the first layer (the diffusion/transpiration promotion layer made only of the base resin fiber) is disposed facing to the outer surface. Furthermore, when comparing the water retention parameters of the single-layer product and the product in which the dripping surface is the second layer, the water retention parameters of the single-layer product are 0.78 to 1.06, while when the dripping surface is the second layer, the parameters are 0.74 to 0.98, which are, although there are slight differences, roughly the same. The reason for this is thought to be that the dripping surface in both cases is formed of the nonwoven fabric layer including highly water absorbent resin formed of the base resin fiber forming the skeleton and the highly water absorbent resin fibers.

Here, looking at the water retention property of the inventive example materials 6 to 9, compared to the inventive example materials 1 to 5 (7.89 g to 19.98 g), although the water retention parameters of such the materials were better, it was found that the water retention property thereof were slightly lower than that of the inventive example materials 1 to 5. Furthermore, in terms of whether the first layer or the second layer is to be disposed facing outward of the product, the water retention parameters were larger and better in the case in which the first layer was disposed facing outward rather than in the case in which the second layer was disposed facing outward since the diffusion/transpiration promotion layer was disposed facing outward. However, since the layer having the water retention property was disposed on the rear surface, the water retention property was slightly inferior, contrary to the results of the water retention parameters (first layer outside arrangement: 7.22 to 15.88 g, second layer outside arrangement: 7.58 to 16.45 g).

Furthermore, the inventive example material 10 includes the highly water absorbent resin fibers at the mixing ratio of 40% by mass, which is similar to the inventive example material 8, and the basis weight of the layer thereof including the highly water absorbent resin fibers is increased from 30 g/m$^2$ to 45 g/m$^2$. Due to an effect of increasing the basis weight of the highly water absorbent resin fibers layer, it can be seen that both the water retention parameters and water retention property of the inventive example material 10 were improved compared to the inventive example material 8.

Also, the inventive example material 11 includes mixed fiber of PET and PET/PP core-sheath structure fiber as the resin fiber, added with LANSEAL, in place of Bell Oasis, at the mixing ratio of 50% by mass as the highly water absorbent resin fibers, in which the basis weight of the nonwoven fabric is further set to be 168 g/m$^2$. In such the case, since the basis weight was large, the content amount of the highly water absorbent resin fibers was larger than that of the inventive example material 9 and thus the water retention capacity was increased significantly compared to the other laminated products.

From the above, regarding the single-layer products of the inventive example materials 1 to 5, the laminated products of the inventive example materials 6 to 11 including the first layer arranged on the outer surface (written in the upper row of each item in the table) and the second layer arranged on the outer surface (written in the lower row of each item in the table), and seventeen types of the cover members, all the materials satisfied the results of 0.70 or more of the nonwoven fabric water retention parameter test, and also satisfied the results of 7.0 g or more in the water retention property test. Also, according to the above test results, it can be seen that the laminated product with the first layer being disposed on the outer surface has the largest water retention parameter. Conversely, the results of the water retention property test of the present invention shows that the water retention capacity of the single-layer product was slightly larger than that of the laminated product. Here, comparing the single-layer product with the laminated product, even when the basis weight of the entire nonwoven fabric of the laminated product is smaller than that of the single-layer product, such as 100 g/m$^2$ or less, the results of the laminated product satisfied the above-mentioned values both in the water retention parameter test and water retention property test.

• Conventional example material:

The conventional example material 1 is a PE film and not a nonwoven fabric, and thus the water retention parameter test and the water retention property test were not conducted.

• Test results for comparison example materials:

Looking at the results for the comparison example materials next, the comparison example material 1 has a low content of the highly water absorbent resin fibers at 5% by mass, and thus it cannot be expected to have an effect of improving the water retention parameter through water absorption. However, since the comparison example material 1 has basic diffusion and transpiration capabilities, the results shows that the water retention parameter thereof is just above 0.70. Nevertheless, the results of the water retention property test is below 7.0 g due to the low mixing ratio of the highly water absorbent resin fibers. The comparison example material 2 is a laminated product, which, however, has a low content of the highly water absorbent resin fibers at 5% by mass like the comparison example material 1. As a result, similarly to the comparison example material 1, the water retention parameter was just above the threshold value whereas the water retention property was below the threshold value of 7 g.

In contrast, the comparison example material 3 has a high content of the highly water absorbent resin fibers at the mixing ratio of 85% by mass and thus the water retention parameter thereof exceeds 0.70 and the result of the water retention property test also exceeds 7.0 g. However, since the content of skeletal base resin fibers forming the skeleton is too high at the mixing ratio of 85% by mass, the fused or bonded surface with the PE resin foam is unstable, and, furthermore, the highly water absorbent resin fibers expanded to be gel after water absorption, causing the surface shape of the nonwoven fabric of the cover member to change and become unstable. As a result, the comparison example material 3 was judged as unsatisfactory.

The comparison example material 4 is a nonwoven fabric made only of PET/PE core-sheath structure fibers and does not include the highly water absorbent resin fibers. However, the fiber surface hereof is treated to be hydrophilic, and thus the water retention parameter exceeded the threshold value, although the water retention capacity was below the threshold value. Also, the comparison example material 5 is a nonwoven fabric made of mixed fiber of PE fibers and rayon fibers with the mixing ratio of the rayon fiber of 40% by mass. Although the water retention parameter of the comparison example material 5 was below the target, the water retention property thereof exceeded the target and this could be because rayon was mixed therein. Consequently, results in which the water retention parameter and water retention property both exceeded the targets were not obtained.

Also, for the comparison example material 6, which is a nonwoven fabric made of mixed fiber of PET/PE core-sheath structure resin and pulp, although the water retention parameter was above the target, the water retention property did not reach the target even with the pulp being mixed in.

As above, the comparison example materials, except for the comparison example material 3 having the high content of the highly water absorbent resin fibers, did not satisfy the threshold values either or at least in one of the water retention parameter test or water retention capacity in the water retention property test, and judged as unsatisfactory. The comparison example material 3 was judged as unsatisfactory because of the high content of the highly water absorbent resin fibers with the low content of the base resin fibers for forming the skeleton, which makes the fused or bonded interface with the PE resin foam unstable as well as the surface shape of the nonwoven fabric unstable.

In addition to water retention property, transpiration from the surface of the nonwoven fabric is another factor for drip prevention of dew condensation water. Although not specifically shown in Table 1, amounts of evaporation of the test example materials are 5.08 g to 11.48 g for the inventive example materials 1 to 5 of the single-layer products, 9.24 g to 10.76 g for the inventive example materials 6 to 11 in which the first layer (the diffusion/transpiration promotion layer made only of the base resin fiber) is the outer layer, and, furthermore, 8.88 g to 10.24 g for the inventive example materials 6 to 11 in which the second layer (the layer including the highly water absorbent resin fibers in the base resin fiber) is the outer layer. This shows that not only water retention property of the nonwoven fabric but also transpiration effects from the surface of the nonwoven fabric contribute to suppression of dew condensation water. The inventive example materials have transpiration effects of at least 5.0 g or more, or even 8 g or more in the case of the laminated products alone, and, furthermore, even 9 g or more of transpiration effect can be seen when the first layer is disposed on the outer surface. Moreover, the transpiration effects of the laminated products are large and such effects are added to and combined with the water retention effects, and it can be thought that this improves the effect of drip prevention or drip suppression of dew condensation of water.

(Purpose and content of dew condensation water dripping confirmation test)

From the results of the water retention parameter test and water retention property test of nonwoven fabrics, it can be thought that a heat insulation cover member for drip prevention or drip suppression of dew condensation water, in which a nonwoven fabric satisfying both a water retention parameter of a nonwoven fabric of 0.70 or more and water retention capacity found under predetermined conditions specified by the present invention in the water retention property test of 7.0 g or more is fused or bonded on a surface of a resin foam, would have an excellent condensation prevention performance. Thus, dew condensation water dripping confirmation tests were conducted using such the cover member, which were compared with the conventional example material.

Here, with the products of the present invention, it has already been confirmed that there would be no dripping of dew condensation water in horizontal piping. However, it is still necessary to confirm dripping performance of dew condensation water in piping other than the horizontal piping. For the dew condensation water dripping confirmation test, , out of horizontal, diagonal, vertical, and bent piping, the vertical piping was selected to be tested since the vertical piping is most susceptible to the effects of gravity.

Also, if twin-type piping having a figure-eight cross section is used, dew condensation water is more easily retained in a recess formed in proximity of joints of the twin piping than with a single pipe due to piping structural reasons, and the retained dew condensation water is more likely to turn into droplets and drip due to the influence of gravity. This makes the test conditions more sever, which is the reason why such the structure was chosen for the test.

Also, in an actual measurement test for an amount of dew condensation water dripping, the twin-type piping was placed vertically in a large constant-temperature-and-humidity chamber, and a refrigerant was run through the piping to create an actual operating environment of a heat exchange device in which an exposure test was conducted for 1080 minutes (18 hours) by setting the constant-temperature-and-humidity chamber to severe environmental conditions of high humidity of 35°C and 90% RH.

The reasons for the above are as follows. The conditions under which dew condensation water dripping occurs vary depending on the environment in which the heat exchange device is installed. Thus, even if dew condensation water does not drip in a predetermined environment, dew condensation water may drip in more severe environmental conditions. Furthermore, if the test is conducted in a low humidity environment of the actual installation environment, dripping may not occur and it may not be possible to evaluate the drip prevention or drip suppression performance of dew condensation water between materials. Thus, in the severe environment, dripping occurs and thus the drip prevention or drip suppression performance of dew condensation water between materials can be evaluated. Furthermore, dripping of dew condensation water does not occur in the horizontal piping.

(Dew condensation water dripping confirmation test under severe environmental conditions using vertical piping with twin-type piping on indoor unit side: FIG. 9)

FIG. 9 is a piping configuration view showing schematically the dew condensation water dripping confirmation test under severe environmental conditions using the vertical piping with the twin-type piping on an indoor unit side. Specifically, a 600 mm drop pipe (indoor unit side piping) 71 (FIG. 9) extending from the ceiling to the indoor unit side, an intermediate piping 73, and a descending pipe (outdoor unit side piping) 72 are connected to create a device in a large constant-temperature-and-humidity chamber. The constant-temperature-and-humidity chamber was set to high-humidity conditions of 35°C and 90% RH, and the device underwent the exposure test conducted for 1080 minutes (18 hours) with temperature of the refrigerant of the piping at 5°C to conduct a severe test to confirm dew condensation water dripping. Here, for the test, a pair of pipes having a diameter of 6.35φ × wall thickness of 0.85 mm and a diameter of 9.52φ × 0.80 mm, respectively, were used, and the heat insulation cover member 5 for drip prevention or drip suppression of dew condensation water of the present invention was wrapped around the outer periphery of each pipe. After heat-sealing the contact portions of the end faces of the resin foam 2 and the nonwoven fabric 3 of the cover member, the two pipes were further heat fused to each other to complete the twin piping structure 20 (see FIG. 2A and FIG. 2B), which was used for testing. At this time, outer diameters of the pipes wrapped with the heat insulation cover members for drip prevention or drip suppression of dew condensation water were approximately 28 mm and 31 mm, respectively. Also, mass of dew condensation water dripped on a tray having a length of 400 mm in a length direction of the piping was measured using an electronic balance (scale) 75.

Here, the conditions set for the constant-temperature-and-humidity chamber of 35°C x 90% RH are extremely severe test conditions where the so-called dew point is approximately 33°C, in which condensation occurs when the moisture content in the air of the constant-temperature-and-humidity chamber is maintained in this state and the temperature is lowered to 33°C.

From the test results of the vertical piping, at least all of the inventive example materials showed an improvement effect of 30% or more compared to the test results of the vertical piping of the conventional example material 1, which was 48 g, and the dripping amount of dew condensation water was 33.6 g or less. Here, for the results of the dripping test of dew condensation water, those satisfying the dripping amount of dew condensation water of 33.6 g or less are considered to have passed and marked as "Good", and those failed are marked as "Bad".

(Test on bonding performance and shape stability of nonwoven fabric)

A state of the bonded interface between the nonwoven fabric (thermoplastic resin fibers) and the resin foam (polyethylene resin foam) of the shaped heat insulation cover member was visually checked, and those that had no floating at the bonded interface were considered as passed, and those that had problems with the bonding state at the interface, such as floating at the interface or even very slight peeling, were considered to be failed. Those that did not have a large change in the shape of the nonwoven fabric after absorption of water in the highly water absorbent resin fibers after the test were considered to have passed and marked as "Good, and those in which the shape of the nonwoven fabric changed greatly from the nonwoven fabric shape before water absorption, were considered to have failed and marked as "Bad" in Table 2.

(Results of dew condensation water dripping test in vertical piping under severe environmental conditions on the test materials, and test results on nonwoven fabric's bonding stability and shape stability)

Table 2 shows the results of the dew condensation water dripping test under severe environmental conditions and test results on nonwoven fabric's bonding stability and shape stability. In addition, as an overall evaluation, if both the results of the dew condensation water dripping test in vertical piping under severe environmental conditions and test results on nonwoven fabric bonding stability and shape stability were considered to have passed, the overall evaluation was marked as "Good", and if the results were unsatisfactory in either of the tests, the overall evaluation was marked as "Bad".

The test results for the individual inventive example materials and the comparison example materials in Table 2 will be described in detail below. All the inventive example materials 1 to 5 of the single-layer products and the inventive example materials 6 to 11 of the laminated products, whose water retention parameter had satisfied the threshold value of 0.70 or more and the water retention property under evaporative environments satisfied the threshold value of 7.0 g or more in both the water retention parameter test and water retention property test under the predetermined conditions shown in Table 1, had shown the results passing both the dew condensation water dripping test under severe environmental conditions and test results on nonwoven fabric bonding stability and shape stability, and were confirmed as "Good".

From the above, it was confirmed that the heat insulation cover members of the inventive example materials 1 to 11 exhibit excellent effects in drip prevention or drip suppression of dew condensation water when checked for dripping of dew condensation water under severe environmental conditions using the vertical piping with the twin-type piping.

[Table 2]

| Test Material | No. | Structure of Heat Insulation Cover Member | Presence of SAF in Nonwoven Fabric | Structure of Layer for Promotion of Diffusion and Transpiration | Mixing Ratio of SAF in Nonwoven Fabric Layer Containing SAF (% by mass) | Condensation Water Dripping Test in Vertical Piping (g) | | Improvement Rate in Amount of Condensation Water Dripped compared to Conventional Example Material (%) | Evaluation Results for Bonding Performance and Shape Satbility of Nonwoven Fabric | Total Evaluation |
|---|---|---|---|---|---|---|---|---|---|---|
| Conventional Example Material: Film | 1 | PE Film Only | No SAF | | PE Film (Furukawa Electric) | Bad | 48 | | Good | Bad |
| Inventive Example Material: Single-Layer Products | 1 | foam + single-layer nonwoven fabric | With SAF | None | PET/PE + Bell Oasis 10% | Good | 32.5 | 32.3 | Good | Good |
| | 2 | foam + single-layer nonwoven fabric | With SAF | None | PET/PE + Bell Oasis 25% | Good | 23.3 | 51.4 | Good | Good |
| | 3 | foam + single-layer nonwoven fabric | With SAF | None | PET/PE + Bell Oasis 40% | Good | 14.3 | 70.2 | Good | Good |
| | 4 | foam + single-layer nonwoven fabric | With SAF | None | PET/PE + Bell Oasis 75% | Good | 3.8 | 92.1 | Good | Good |
| | 5 | foam + single-layer nonwoven fabric | With SAF | None | PET 30%+PP/PE 20% + LANSEAL 50% | Good | 10.6 | 59.2 | Good | Good |

EP 4 751 904 A1

31

| Test Material | No. | Structure of Heat Insulation Cover Member | Presence of SAF in Nonwoven Fabric | Structure of Layer for Promotion of Diffusion and Transpiration | Mixing Ratio of SAF in Nonwoven Fabric Layer Containing SAF (% by mass) | Condensation Water Dripping Test in Vertical Piping (g) | | Improvement Rate in Amount of Condensation Water Dripped compared to Conventional Example Material (%) | Evaluation Results for Bonding Performance and Shape Satbility of Nonwoven Fabric | Total Evaluation |
|---|---|---|---|---|---|---|---|---|---|---|
| Inventive Example Material: Laminated Products | 6 | foam + laminated nonwoven fabric | With SAF | PET/PE | PET/PE + Bell Oasis 10% | Good | 23.5 / 28.4 | 51.0 / 40.8 | Good | Good |
| | 7 | foam + laminated nonwoven fabric | With SAF | PET/PE | PET/PE + Bell Oasis 25% | Good | 20.2 | 57.9 | Good | Good |
| | 8 | foam + laminated nonwoven fabric | With SAF | PET/PE | PET/PE + Bell Oasis 40% | Good | 11.5 / 14.3 | 76.0 / 70.2 | Good | Good |
| | 9 | foam + laminated nonwoven fabric | With SAF | PET/PE | PET/PE + Bell Oasis 75% | Good | 5.6 | 88.3 | Good | Good |
| | 10 | foam + laminated nonwoven fabric | With SAF | PET/PE | PET/PE + Bell Oasis 40% | Good | 1.1 | 97.7 | Good | Good |
| | 11 | foam + laminated nonwoven fabric | With SAF | PET/PE | PET 30%+PP/PE 20% + LANSEAL 50% | Good | 0.8 | 98.3 | Good | Good |

EP 4 751 904 A1

(continued)

| Test Material | No. | Structure of Heat Insulation Cover Member | Presence of SAF in Nonwoven Fabric | Structure of Layer for Promotion of Diffusion and Transpiration | Mixing Ratio of SAF in Nonwoven Fabric Layer Containing SAF (% by mass) | Condensation Water Dripping Test in Vertical Piping (g) | | Improvement Rate in Amount of Condensation Water Dripped compared to Conventional Example Material (%) | Evaluation Results for Bonding Performance and Shape Satbility of Nonwoven Fabric | Total Evaluation |
|---|---|---|---|---|---|---|---|---|---|---|
| Comparison Example Material | 1 | foam + single-layer nonwoven fabric | With SAF | PET/PE | PET/PE **+ Bell** Oasis 5% | Bad | 42.5 | 11.5 | Good | Bad |
| | 2 | foam + laminated nonwoven fabric | With SAF | PET/PE | PET/PE + Bell Oasis 5% | Bad | 43.9 | 8.5 | Good | Bad |
| | 3 | foam + laminated nonwoven fabric | With SAF | PET/PE | PET/PE + Bell Oasis 85% | Good | 2.6 | 94.6 | Bad | Bad |
| | 4 | foam + single-layer nonwoven fabric | With SAF | None | PET/PE (sheath treated to be hydrophilic) | Bad | 44.5 | 7.3 | Good | Bad |
| | 5 | foam + single-layer nonwoven fabric | With SAF | None | PE + rayon 40% | Bad | 41.1 | 14.4 | Good | Bad |
| | 6 | foam + single-layer nonwoven fabric | With SAF | None | PET/PE + pulp 30% | Bad | 38.8 | 19.2 | Good | Bad |

In the results of "Dew condensation water dripping test in vertical piping" in the table, those in which the test results are listed in one row even though the nonwoven fabric is a laminated product (the inventive example materials 7, 9, 10, and 11) show the test results for the arrangement A (in which the layer that does not include highly water absorbent resin fibers is the outer layer and the layer that includes highly water absorbent resin fibers is the inner layer). The test results for the inventive example materials 6 and 8 are shown in two rows because the nonwoven fabric is a laminated product, and the test results for the arrangement A with the same layer structure as above are shown in the upper row, and the test results for the arrangement B (where the layer containing highly water absorbent resin fibers is disposed as the outer layer and the layer that does not contain highly water absorbent resin fibers is disposed as the inner layer) are shown in the lower row. The same applies to the comparison example materials 2 and 3.

As mentioned above, the "Dew condensation water dripping test in vertical piping" was conducted by measuring the mass of the amount of dew condensation water dripped in a severe test of 16 hours of exposure at a temperature of 35°C and humidity of 90%. The results show that, compared to the conventional example material, an improvement effect in the amount of dew condensation water dripped of at least more than 30% is recognized. However, on the other hand, the improvement effect in the amount of dew condensation water dripped of the comparison example materials, except for the comparison example material 3 including 85% of the highly water absorbent resin fibers, was less than 30%.

• Test results for conventional example material:

Looking at the amount of dew condensation water dripped from the conventional example material, which is to be the standard, in conventional example material 1, 48 g of dew condensation water dripped because the PE resin film was simply fused to the surface of the PE resin foam.

• Test results for inventive example materials:

The results of the dew condensation water dripping test for the inventive example materials 1 to 11 are as follows: both the single-layer products and the laminated products have a nonwoven fabric layer containing the highly water absorbent resin; when the content of highly water absorbent resin fibers in such the nonwoven fabric layer satisfies 10% by mass to 80% by mass, and the content of the thermoplastic resin, which is the fiber forming the remaining skeleton structure of the nonwoven fabric, satisfies the composition of 20% by mass to 90% by mass, the amounts of dew condensation water dripped from the single-layer products were 3.8 g to 32.5 g and the improvement rate thereof to the conventional example material 1 was 32.3% to 92.1%, while the amounts of dew condensation water dripped from the laminated products were 0.8 g to 28.4 g and the improvement rate thereof to the conventional example material 1 was 40.8% to 98.3%; and thus the improvement rate of both the single-layer products and laminated products exceeded at least 30%. At this time, when comparing the single-layer products and laminated products, the laminated products were superior with less amounts of dew condensation water dripped. The reason for this is thought to be that the laminated product has a separate layer, which does not contain the highly water absorbent resin fibers, disposed as a layer for promotion of diffusion and evaporation, and this promotes diffusion and evaporation of dew condensation water. Furthermore, for both the single-layer products and laminated products, there is a tendency for the amount of dew condensation water dripped to decrease as the content of highly water absorbent resin fibers increases. This is thought to be due to the effect of an increase in the water retention capacity of the highly water absorbent resin fibers due to the increase in the content of the highly water absorbent resin fibers, and the secondary effect of promoting diffusion and transpiration effect of dew condensation water due to the decrease of the amount of unretained dew condensation water, and such the effects are considered to be superimposed.

Regarding the arrangement of the layer for promotion of diffusion and evaporation and the layer containing the highly water absorbent resin fibers within the laminated product, the results of the test example materials 6 and 8 showed that the arrangement in which the layer for promotion of diffusion and evaporation (the first layer) was disposed on the outside was superior than the arrangement in which the layer for promotion of diffusion and evaporation was disposed on the inside in that the amount of dew condensation water dripped was less. The reason for this it thought to be that, by disposing the first layer on the outside, although there is a slight decrease in the water retention property, the evaporation effect can be increased due to the improvement in the water retention parameter and, as a result, the amount of dew condensation water dripped is less than in the case of disposing the first layer on the inside.

• Test results for comparison example materials:

The comparison example material 1 has a single layer of the base resin fibers mixed with an small mixing amount of the highly water absorbent resin fibers at the mixing ratio of 5% by mass, and dripping of 42.5 g (the improvement rate: 11.5%) of dew condensation water occurred.

In the comparison example material 2, the base resin fibers of the laminated layer was mixed with the highly water absorbent resin fibers at the mixing ratio of 5% by mass. As a result, dripping of 43.9 g (the improvement rate: 8.5%) of dew condensation water occurred. As above, the conventional example material 1, which was used as the standard before improvement, showed poor test results due to a structural reason that conventional example material 1 does not have nonwoven fabric and lacks both heat insulation and water retention property. Also, the comparison example materials 1 and 2 had the mixing ratio of highly water absorbent resin fibers of 5% by mass for both the single-layer product and the laminated product, and compared to the inventive example products, the comparison test materials had a lower mixing ratio of the highly water absorbent resin fibers, resulting in insufficient water retention property, and the amount of dew condensation water dripped was less than 30%, which is the lower limit of the improvement rate of the inventive example material, and the amount of dew condensation water dripped increased.

In the comparison example material 3, the base resin fibers of the laminated layer were mixed with the highly water absorbent resin fibers at the mixing ratio of 85% by mass, which exceeds the upper limit of 80% of the mixing ratio for the inventive example materials. As a result, the mixing ratio of the highly water absorbent resin fibers is higher than that for the inventive example materials. For this reason, the amount of dew condensation water occurred in the vertical piping test was 2.6 g (the improvement rate:94.6%), which is similar to the amount of water occurred in the case of the inventive example materials, and the effect of drip prevention or drip suppression of dew condensation water was large. However, while the water retention capacity is large due to the high mixing ratio of the highly water absorbent resin fibers, the content ratio of the base resin decreases, resulting in a decrease in strength of the fused or bonded interface between the resin foam and the nonwoven fabric, resulting in unstable bonding. Furthermore, the surface shape of the nonwoven fabric after water absorption may also become unstable and in some cases, the highly water absorbent resin fibers fell off after water absorption. Thus, the comparison example material 3 was judged as fail and marked as "Bad".

The comparison example material 4 was a PET/PE nonwoven fabric with a core-sheath structure that did not contain the highly water absorbent resin fibers, in which the surface of the core-sheath fiber was treated with hydrophilic treatment and bonded to the surface of a resin foam. In such the case, the amount of dripping in the case of vertical piping test was 44.5 g (the improvement rate:7.3%), and although it is estimated that the effect of the hydrophilic treatment was slightly noticeable, the test results did not satisfy the improvement rate of 30% of the inventive example materials.

The comparison example material 5 was a nonwoven fabric made by mixing PE fibers and rayon fibers, with the rayon fibers content being 40% by mass to the total weight of the nonwoven fabric. The amount of dripping for such the material was 41.1 g (the improvement rate: 14.4%), which was not as high as the improvement rate of 30% of the inventive example materials.

The comparison example material 6 was a nonwoven fabric made of a mixture of PET/PE core-sheath structure fibers and pulp, with a pulp content of 30% by mass to the total weight of the nonwoven fabric. As a result, the amount of dripping in the case of vertical piping test was 38.8 g (the improvement rate: 19.2%). While being superior to the other comparison example materials, the comparison example material 6 fell short of the lowest improvement rate of 30% of the inventive example materials.

As an embodiment with laminated nonwoven fabrics, the inventive example material 8 may be useful as a reference. That is, in the vertical piping test, when the first layer (the layer without SAF) was disposed on the outside and the second layer (the layer with SAF) was disposed on the inside (the arrangement (A)), the amount of dew condensation water dripped was 11.5 g in the arrangement (A) where the first layer is the outside layer, while the amount of dew condensation water dripped was 14.3 g in the inverted arrangement, and the improvement rates were 76.0% and 70.2%, respectively. From the results, the arrangement (A) with the first layer being the outer layer tends to be slightly better than the arrangement (B) with the first layer being on the inside and the second layer being on the outside.


(Applications of the heat insulation cover member to covering members for other heat exchange pipes)

Application examples of the heat insulation cover member of the present invention to other heat insulation cover members will be described. Possible application examples include creating and using a joint covering member that covers a gap between heat insulation cover members, using the heat insulation cover member as an elbow covering member for a bent part of a heat exchanger pipe, and wrapping the heat insulation cover member around an existing pipe to be used as a covering member for an existing pipe cover. Thus, the heat insulation cover members of the present invention were manufactured to be used as such the members and used. The structures of such the members will be described.


• Joint covering member

Here, based on experimental results of the present invention, manufactured was a joint covering member (an insulation cover member) 65 that can be disposed so as to cover a gap between a specified insulation cover member and an insulation cover member disposed next to the specified insulation cover member in a longitudinal direction of the piping (see FIG. 10). In such the joint covering member, an adhesive layer 63 is provided on a surface of the resin foam that is on a side opposite to the nonwoven fabric 3, a release sheet 62 is attached onto the adhesive layer 63, and the nonwoven fabric covers the other surface of the resin foam. The nonwoven fabric includes a predetermined amount of the highly water absorbent resin fibers (not shown).

In FIG. 11, the two piping structures 10 are arranged so as to be continuous in the longitudinal direction. There is a thin joint 66 formed between such the piping structures. In the present embodiment, the joint is fixed by being wrapped around by the joint covering member (a heat insulation cover member with adhesive) 65 shown in FIG. 10. In this way, there will be no condensation at the joint that is not covered with the cover member, and dripping of dew condensation water at such part can also be prevented or suppressed.

• Elbow covering member

FIG. 12 is a front view showing schematically an embodiment of an elbow covering member (a bent joint) 25. The hatched areas are to be provided with an adhesive or bonding agent. The bent joint is formed with, for example, a narrow pipe housing portion 22 and a thick pipe housing portion 23. Refrigerant pipes are to be disposed in the pipe housing portions 22 and 23, and in between the two, an elbow, which is a refrigerant pipe bending member for 90° bend, is installed in an elbow housing portion 26. At this time, the elbow covering member is produced by press molding the sheet-like heat insulation cover member for drip prevention or drip suppression. Thus, although the thickness of the heat insulation cover member is reduced due to press molding by 1 to 2 mm depending on molded areas, cells thereof become finer by that amount and thus the insulation performance does not change much. When using the product, a folding portion 24 is folded into a valley fold, and the adhesives applied to the surfaces of branching portions 28 (half-split members) are butted against each other and fixed. Although not shown in the drawing, the elbow covering member of the present invention uses a foam surface as a contact surface with the piping, and the outer surface of the elbow covering member as a nonwoven fabric surface of the present invention, and thus the nonwoven fabric containing highly water absorbent resin fibers is disposed on the surface of the elbow covering member (bent joint) 25. In addition, even in the case of the elbow covering member, the same effect can be obtained in terms of drip suppression or drip prevention of dew condensation water as in the case of the heat insulation cover member for drip suppression or drip prevention of dew condensation water that covers an outer periphery of a straight heat exchanger pipes.

• Tee member covering member

FIG. 13 is a front view schematically showing an embodiment of a tee member covering member 78. The tee member covering member 22 has a substantially T shape that is vertically symmetrical at the folding portion 24, and has a substantially cross shape as a whole. In the tee member covering member 78, a pipe diameter of a tee member housing portion 77 is larger than the pipe housing portion 22 that is to be connected to a tee member. Thus, a wall thickness in proximity of the center part thereof branching into a T shape is thicker and thus there are two T-shaped tiers.

Also, as a similar member, other than the elbow covering member used for a bent portion, there is a tee member for branching a straight piping into a T shape. The tee member is a metal-made member for branching downward or upward from a straight portion, which corresponds to a head of the T shape. Although a state in which the tee member is covered with a tee member covering member is not particularly shown, it is possible to form, similarly to the elbow covering member, for such the tee member, the tee member covering member having a branching portion on a lower side or on an upper side with the head of the T shape being the folding portion 24, the folding portion 24 and branching portions 28 (half-split members) surrounding the entire branching portion, and the folding portion being a hinge for opening. Here, in the case of the tee member covering member 78, the same effect can be obtained in terms of drip suppression or drip prevention of dew condensation water as in the case of the heat insulation cover member for drip suppression or drip prevention of dew condensation water that covers the outer periphery of the straight heat exchanger pipe.

• Covering member for covering existing conventional pipe cover

FIG. 14 a cross-sectional view showing an embodiment in which a covering member 68 for covering an existing pipe cover is double-wrapped around a resin form covering a refrigerant pipe with a separating film therebetween. In the piping structure of the present embodiment, when viewed from the center of the cross-sectional circle, the refrigerant pipe 1 is located at the innermost position, and the resin foam 2 of the existing conventional pipe cover 76 covers the refrigerant pipe 1. The existing conventional pipe cover 76 has a structure in which a resin film 27 of PE etc. covers the resin foam 2. In such a structure in which PE film is used for the resin foam, since the PE film has no water retention property, condensation may occur depending on environmental conditions around the piping and the condensation may likely to drip.

Furthermore, the resin foam 2 covers the outside of the resin film 27, and then the nonwoven fabric 3 covers the outermost layer. That is, the resin foam 2, the resin film 27, the resin foam 2, and the nonwoven fabric 3 together form a covering structure using the covering member 68 that covers the existing conventional pipe cover 76. By further covering such the existing conventional pipe cover 76 with a cover member in which the nonwoven fabric 3 including the highly water absorbent polymers is disposed on the resin form surface, it is possible to prevent or suppress dripping of dew condensation water.

In the present embodiment, the adhesive layer 63 (thickness thereof is not shown) is disposed on a back surface of a part extended from the resin foam of the nonwoven fabric 3 on the outermost layer of the upper layer resin foam, and, furthermore, the film-like release sheet 62 is attached to the back surface of the adhesive layer 63. By peeling off the release sheet 62, the adhesive layer 63 can be bonded with the resin foam 2. The covering member 68 for covering the existing conventional pipe cover shown in the drawing can be applied to the refrigerant pipe covered with the existing conventional pipe cover 76, thereby preventing or suppressing dew condensation water from dripping. Specifically, the covering member 68 for covering the conventional pipe cover 76 shown in FIG. 14 has a gap 69 that can be widened as in opening double doors such that the heat insulation cover member can be attached by covering the existing pipe. The nonwoven fabric 3 extending from one end of the covering member 68 covering the conventional pipe cover 76 is attached with the adhesive layer 63 and can be wrapped around and bonded as peeling the release sheet 62. Since the heat insulation cover member for drip prevention or drip suppression of dew condensation water is used for the nonwoven fabric 3, and thus contains the same amount of the highly water absorbent resin fibers (not shown) as in the present invention, thereby exerting the effect of drip prevention or drip suppression of dew condensation water.

(Application of heat insulation cover member to duct covering member and covering structure thereof)

Water vapor may condense on an outer surface of a metal duct for a heat exchange device having a substantially rectangular cross section, and water droplets may drip down the surface of the duct. As a countermeasure thereto, FIG. 15 shows an embodiment in which the heat insulation cover member according to the present invention is applied to a metal (particularly iron) duct 67 as a duct covering member 70. Specifically, an adhesive layer or glue layer (not shown) is provided on a side of the resin foam 2 opposite from the nonwoven fabric 3, and the heat insulation cover member is attached to the iron duct 67 as the duct covering member 70 via the adhesive layer. Here, the nonwoven fabric 3 includes the highly water absorbent resin fibers (not shown). At this time, the heat insulation cover member attached with the adhesive is used as the duct covering member 70.

Here, the duct covering member 70 may be wrapped over the corners of the duct 67. However, in such the case, the corners cannot be wrapped with an even thickness, and thus a sheet cut to a predetermined size corresponding to each side of the outer peripheral surface of the duct may be used as the duct covering member 70 and attached to each outer surface of the duct. In this way, the entire outer peripheral surface of the duct 67 can be covered with the heat insulation cover member as the duct covering member 70. This enables to obtain a duct covering structure in which the duct covering member 70 is attached to the outer peripheral surface of the duct. Thus, it is expected to have the effect of drip prevention or drip suppression of dew condensation water.

(Application of heat insulation cover member to electrical device box covering member and covering structure thereof)

Examples of an electrical device box 80 include cubicles, distribution boards, and panel boards that house equipment that receives power from an external high-voltage power source and reduces the voltage and equipment that distributes power to required locations, as well as control panels that house electrical equipment for automatically controlling machines and equipment, and battery boxes that house batteries such as storage batteries.

In the present invention, the above are collectively defined as "electrical device boxes". Such the electrical device boxes are exposed to temperature and humidity changes both indoors and outdoors. As the internal devices housed are designed to be operated at fast speed due to higher integration, condensation due to heat generated by such devices has become a problem. The electrical device boxes contain many components such as metal parts having high thermal conductivity, which are susceptible to changes in outside temperature, increasing the risk of condensation. In particular, if condensation occurs on the ceiling, the dew condensation water drips onto various devices, which may cause malfunctions, and thus it is particularly important to prevent condensation on the ceiling. Thus, in addition to at least the back or front surface of the electrical device box 80 excluding the opening of the power distribution panel, in particular to prevent condensation on the ceiling surface, the inner surface of the box, and the internal space of the box, the heat insulation cover member of the present invention tailored to each shape can be installed to prevent and suppress condensation inside the electrical device box.

Thus, an electrical device box covering structure using an electrical device box and a distribution box with a heat insulation cover member affixed to the ceiling will be created as an example, and a comparative experiment under test conditions (outside temperature 20°C, humidity inside the electrical device box 35°C - 90% RH) between the case in which the electrical device box is used as it is without the heat insulation cover member and the case in which the heat insulation cover member is used as the covering structure for the electrical device box is planned to be conducted. By conducting such an experiment, it is expected that it will be possible to suppress condensation on the inner walls, ceiling surfaces, and iron plate surfaces of the electrical device boxes, or even if it is not possible to suppress condensation, it will be possible to significantly suppress dripping of dew condensation water.

A specific example of the electrical device box 80 is a distribution box. To be more specific, an AC load switch 87, a distribution board transformer 84, an ammeter 85, a voltmeter 86, a wiring circuit breaker (switch) 83, etc. are arranged on an inner peripheral surface inside an iron box. At this time, the above-mentioned devices in the distribution box are installed on the iron-made plate 88 inside the box and connected with wiring as appropriate. At this time, in order to prevent condensation, a protective cover member 5 (the resin foam 2 and the nonwoven fabric 3) is attached to the ceiling surface, inner wall surface, bottom surface of the distribution box, or the back or surface (usually the back surface) of the iron plate on which various members are installed to increase heat insulation and prevent condensation Although the plate inside the box is usually made of iron with a resin-coated surface, the plate may also be made of resin.

FIG. 16 shows schematically an example of a distribution box, in which various parts and devices such as the AC load switch 87, the distribution board transformer 84, the ammeter 85, the voltmeter 86, the wiring circuit breaker (switch) 83 are appropriately wired and disposed as mentioned above. The distribution box is typically a rectangular box-shaped box that is enclosed by a roof, an iron-made bottom plate, side walls, a base for raising the height, and a back surface with an opening-closing door formed on the front surface. Note that if the wiring connecting the various parts and devices is installed on the surface of the iron plate, there is no problem in disposing a protective cover member on the back surface of the iron-made plate 88. On the other hand, when the various parts and devices are disposed in the opening of the iron plate and the wiring is disposed on the back surface, it is preferable to dispose the protective cover member on the back side of the iron-made plate 88 in advance before laying out the wiring so as not to obstruct the wiring.

Components of the electrical device box include: 1) the AC load switch 87 (arranged at the front of the plate), 2) the transformer (arranged without the plate: due to large volume of the transformer) 84, 3) the ammeter (arranged at the opening of the plate) 85, 4) the voltmeter (arranged at the opening of the plate) 86, 5) the wiring circuit breaker (arranged at the opening of the plate) 83, 6) the heat insulation cover member 5, and 7) an electrical device box main body 81. As described above, the iron-made plate 88 is not installed at a part of the transformer, and the inverted-L shaped iron-made plate 88 having an opening 89 cut out at a lower left side thereof when viewed from above is installed at the part excluding the transformer. The AC load switches 87 are arranged at the front of the plate, and, also, the opening is formed in the iron-made plate 88, in which the ammeter 85 and the voltmeter 86 as well as the switches 83 for various wirings are arranged.

The effects of the heat insulation cover member as a measure against condensation in the electrical device boxes can be summarized as follows. The condensation phenomenon is affected by the surface temperature of an object on which condensation occurs and the absolute humidity in the temperature and humidity environment in which the object is disposed. For example, when considering condensation on the inner surface of the electrical device box, if the temperature of the inner surface of the box is higher than the dew point, condensation would not occur even in a constant humidity environment. However, for example, if the surface temperature drops below the dew point as the surface temperature decreases, condensation occurs. However, if a protective cover of the present invention is used, heat insulation effects of the resin foam constituting the lower part of the protective cover can prevent a decrease in the surface temperature of the inner surface of the electrical device box, and at the same time, the effect of increasing the surface area of the nonwoven fabric 3 including the highly water absorbent resin bonded to the surface and improving the heat transfer coefficient due to water when water is absorbed suppresses condensation, and even if condensation occurs, it is expected to suppress or alleviate dripping of dew condensation water.

(Additional notes on materials for working examples and comparison examples, test results, and others)

The above-mentioned thermoplastic resin fibers include, for example, PP, PE, and PET fibers, or PET/PE and PP/PE fibers with core-sheath structures. In the working examples, among the above fibers, the test results were shown using nonwoven fabrics having core-sheath structures of PET/PE as the base resin for both single-layer and multi-layer nonwoven fabrics. However, as the base resin, in addition to the PET/PE core-sheath structure, the PP/PE core-sheath structure may also be used. Here, the reason for using fiber with the core-sheath structure is that it is preferable to use PET or PP having a high melting point for the core and PE fiber with a low melting point for the sheath.

It is of course possible to use ordinary fibers with no core-sheath structure, such as PP, PE, or PET. However, using a material having a high melting point for the core and using a material having a low melting point for the sheath can improve both strength and fusion performance of the nonwoven fabric. That is, whether to use fibers with core-sheath structure or ordinary fibers can be decided depending on the usage situation.

The products of the present invention (inventive example materials) have at least a nonwoven fabric layer containing at least highly water absorbent resin fibers, whether the nonwoven fabric laminated on the resin foam has a single layer or multiple layers (two layers). Such the nonwoven fabric layer contains 10% by mass to 80% by mass of the highly water absorbent resin fibers and 20% by mass to 90% by mass of the thermoplastic resin fibers for the remainder, and thus the water retention parameter and water retention property satisfy the predetermined values. As a result, the inventive example materials showed in the vertical piping dew condensation water dripping test an improvement effect in the amount of dew condensation water dripped compared to the conventional example material, with the improvement rate of more than 30%. When this is considered to be the threshold, the materials showed good results, with the amount of dew condensation water dripped being less than 33.6 g. Such good results were confirmed not only with Bell Oasis (the inventive example materials 1 to 4 and 6 to 10) but also with LANSEAL (the inventive example materials 5 and 11), regardless of the type of the highly water absorbent resin fibers. Furthermore, it was confirmed that not only when the nonwoven fabric is laminated (two layers) (the inventive example materials 6 to 11), but also when the nonwoven fabric is a single layer (the inventive example materials 1 to 5), by including a predetermined amount of highly water absorbent resin fibers, good results were obtained in the vertical piping dew condensation water dripping test using the twin-type piping under severe temperature and humidity conditions.

Also, when the nonwoven fabric has a laminated structure, basic performance and prevention or suppression of condensation tests were conducted on both a laminated structure of the nonwoven fabric in which the first layer not containing highly water absorbent resin fibers is disposed as the outer layer and the second layer containing highly water absorbent resin fibers is disposed as the inner layer, and the inverted structure of the nonwoven fabric in which the second layer containing highly water absorbent resin fibers is disposed as the outer layer and the first layer not containing highly water absorbent resin fibers is disposed as the inner layer. The results of the tests show that the cover member having the laminated structure in which the first layer not containing highly water absorbent resin fibers is disposed as the outer layer has better performance in drip prevention or suppression of dew condensation water, and when comparing the laminated products with the single-layer products, the laminated products have better performance in prevention or suppression of dew condensation water than the single-layer products.

The difference in the performance in prevention of condensation or suppression of dripping between the above laminated products and the single-layer products is thought to be as follows. By creating the laminated structure including the inverted structure, the first layer, which is the nonwoven fabric layer made of thermoplastic resin fibers that do not contain highly water absorbent resin fibers, is provided in the laminated product, thereby providing the effect of widely dispersing dew condensation water. Furthermore, by disposing the first layer as the outer layer, it is assumed that the transpiration effect of dew condensation water is promoted. In contrast, in the case of inverted structure in which the second layer is disposed as the outer layer, the structure has some effect of diffusing the dew condensation water that has permeated through the second layer, which is the outer layer, and reached the first layer. However, the transpiration effect of dew condensation water when the second layer was formed as the outer layer is weak, and thus it can be thought that the laminated product with the first layer as the outer layer has better drip prevention or drip suppression of dew condensation water effect than the laminated product with the second layer as the outer layer. This can be understood from the fact that, as described in paragraph [0075], the transpiration effect in the case in which the first layer is disposed on the outer surface is greater than the transpiration effect in the case in which the second layer is disposed on the outer surface or in the case of the single-layer product. As above, it can be thought that balance between diffusion and transpiration effects in the nonwoven fabric and water retention property effect of the highly water absorbent resin fibers is important for drip prevention or drip suppression of dew condensation water, and thus the heat insulation cover member in which the nonwoven fabric with the first layer being disposed on the outer surface is laminated onto the resin foam is most effective for drip prevention or drip suppression of dew condensation water.

Among the inventive example materials, the higher the mixing ratio of the highly water absorbent resin fibers is, the higher the water retention parameter and water retention property are, and in the dew condensation water dripping test in vertical piping, the effect of preventing or suppressing the dripping of dew condensation water was observed. Specifically, in the dew condensation water dripping test in vertical piping, it was found that when the mixing ratio of Bell Oasis was 10% by mass, the amount of dew condensation water dripped was 32.5 g, while when the mixing ratio was increased to 75% by mass, the amount of dew condensation water dripped was suppressed to 3.8 g. In addition, when the mixing ratio was 25% or more, the amount of dew condensation water dripped was suppressed to 0.8 to 23.3 g, which was 24 g or less, in the vertical piping test, with the improvement rate exceeding 50%. Thus, it is preferable that the mixing ratio of the layer containing the highly water absorbent resin is 25% or more.

Also, FIG. 17 shows a profile of an amount of dripped dew condensation water versus time in a dew condensation water dripping test, using the vertical piping with the twin-type piping as a representative test material, under severe environmental conditions of a temperature of 35°C and a humidity of 90%. The test results show changes over time of conventional example material 1 and inventive example material 8 (the mixing ratio of the highly water absorbent resin Bell Oasis is 40%) shown in Table 2. Comparing the conventional example material 1 and inventive example material 8, it can be seen that the conventional example material 1 shows a tendency that dripping of dew condensation water progressed rapidly after a little over six hours had passed, whereas for the inventive example material 8 of the present invention, no dripping of dew condensation water occurred until eleven hours had passed, after which dew condensation water did occur, yet with the tendency in increase thereof being mild. Also, in contrast, although not particularly shown, in the case of the horizontal piping, none of the inventive example materials including the inventive example material 8 of the present invention (the inventive example materials 1 to 11) caused dripping of dew condensation water, whereas the conventional example material 1 caused dripping of dew condensation water even in the case of horizontal piping.

From the above results, in a piping structure to which the heat insulation cover member for drip prevention or suppression of the present invention is applied, dripping of dew condensation water on the pipe surface can be effectively suppressed or prevented even if the refrigerant pipes for air conditioners or the like are not in horizontal piping but in vertical piping. Thus, according to the present invention, it is possible to suppress water droplets dripped from refrigerant pipes from accumulating in the ceiling and around vertical pipes in the room, which may otherwise cause mold and bacteria to grow or wood to rot and deteriorate the living environment, and it can be seen that, compared to conventional products, it is possible to prevent deterioration of the living environment and maintain the health of the house for a longer period of time.

A covering component for heat exchanger pipes according to the present invention has an effect of drip prevention of dew condensation water. That is, when using the heat insulation cover member of the present invention in any of protecting members including the joint covering member for covering a gap between the heat insulation cover members, the elbow covering member in which the heat insulation cover member is applied to a bent part of a heat exchanger pipe, and the covering member for covering an existing pipe cover by being wrapped around the existing pipe, it is expected to suppress dew condensation water from being generated, or, even if dew condensation water is generated, it is expected to prevent or suppress dripping of the dew condensation water.

Here, it can be thought that the heat insulation cover member of the present invention may be used in the above-mentioned joint covering member, the elbow covering member, the tee member covering member, and the covering member for existing pipe cover. In any of such applications, basically, the structure in which the heat insulation cover member for drip prevention or drip suppression of dew condensation water of the present invention in which a nonwoven fabric is bonded to a surface of a resin foam is utilized, and, furthermore, the same effects as the present invention can be expected since the heat insulation cover member of the present invention is covered over outer peripheries of the gap between the protective members as the heat exchanger pipe covering member or the existing heat insulation structure using a resin foam. Also, strictly speaking, in the cases of the elbow covering member and the tee member covering member, the heat insulation cover member for drip prevention or drip suppression of dew condensation water is press-molded for use, and it was found that, although an apparent thickness as the cover member was reduced at some parts by 20% or so, cells at such parts become finer and the insulation performance did not change much. From the above, it was thought that the above-mentioned joint covering member, the elbow covering member, the tee member covering member, and the covering member for existing pipe cover all have the same condensation prevention or condensation suppression performance as the heat insulation cover member for drip prevention or drip suppression of dew condensation water of the present invention, in which a nonwoven fabric was bonded onto a surface of a resin foam. Here, it has been confirmed that the effects of drip prevention or suppression of dew condensation water of such the heat exchanger covering members is sufficient.

Susceptibility of condensation in copper refrigerant pipes and metal (iron) ducts are to be considered. For example, when assuming that the environment temperature is the same at 23°C and the fluid flowing in the refrigerant pipe is at the same constant temperature of 5°C, the fluid temperatures are both constant. Furthermore, since the cross-sectional direction of the duct has a similar structure in which a nonwoven fabric of a predetermined thickness containing highly water absorbent resin fibers is laminated onto the surface side of a resin foam, it is thought that the surface temperature of both the copper pipe and the duct will be approximately the same in terms of heat transfer in the cross-sectional direction under the conditions that the same resin foam having the thickness is used.

However, in such the case, the temperature of the refrigerant flowing through the refrigerant pipe is the same as the temperature of air flowing in the duct, and thus the temperature at the surface of the nonwoven fabric therebetween is the same, assuming that the temperature of the fluid flowing in the pipe axial direction in a steady state is constant. On the other hand, the temperature of the fluid flowing in the currently reviewing copper refrigerant pipe is around 5°C, and the temperature of air flowing in the duct is 13 to 17°C. In such the case, the temperature of air flowing in the duct is generally higher than the temperature of the fluid flowing in the copper refrigerant pipe, and thus less heat is transferred in the duct.

Also, when comparing the thermal conductivity of copper, which is the material of the refrigerant pipe, and iron, which is the material of the duct, the thermal conductivity of iron is lower, and thermal resistance of the latter is higher when both have the thickness of 1 mm. Thus, in terms of heat transfer from each fluid, an influence of the air temperature inside the duct to the surface temperature of the resin foam and the nonwoven fabric covering the duct surface is smaller than in the case of the copper pipe covered with the resin foam and the nonwoven fabric. As a result, even from such the perspective, the decrease in the surface temperature of the nonwoven fabric is smaller in the case of the duct than in the case of the copper pipe, and the structure in which the duct is covered has less influence from the fluid inside on the surface temperature of the nonwoven fabric than the structure in which the copper pipe is covered. Thus, the evaluation results of condensation test with the copper-made refrigerant pipes of the present invention are thought to indicate that the surface temperatures of the foam and nonwoven fabric in the case of ducts are not too severe, but rather tend to be milder. Thus, it is believed that the trends in the test results of the heat insulation cover member of the present invention for drip prevention or drip suppression of dew condensation water can be applied directly to the evaluation of the occurrence and dripping of condensation.

Just to be sure, to confirm the above, by using the test material 1 and the test material 6 having the least mixing ratio of SAF among the inventive products, in which the test material 1 is a single-layer nonwoven fabric (with a basis weight

of 145 g/m$^2$, and a mixing ratio of SAF of 10%) and the test material 6 is a two-layer laminated nonwoven fabric (with a surface basis weight of PET/PE of 18 g/m$^2$, and a second layer with a basis weight of 18 g/m$^2$), a rectangular parallelepiped-shaped duct with a width of 10 cm, height of 10 cm, and length of 30 cm was created. A structure was prepared in which the entire surface of the duct was covered with the test material by bonding the foam surface side of the test material to the duct with an adhesive such that the nonwoven fabric side of the test material was placed on the surface of the duct. The structure was installed so that air flow was in a vertical direction, the air temperature in the duct was adjusted to the lower limit of 13°C $\pm$ 1°C, and the test was conducted to confirm dripping of dew condensation water in a severe environment with a temperature of 35°C and humidity of 90%. As a result, evaluation results equivalent to or higher than those of the copper pipe shown in Table 2 were obtained. As a result, it was confirmed that the test materials have the sufficient effects on prevention or suppression of condensation as the duct cover member.

At this time, it is clear from Table 1 that the nonwoven fabric satisfies the water retention parameter for retaining water against gravity of 0.70 or more and the water retention capacity found under the predetermined conditions of 7.0 g or more.

The effects of the heat insulation cover member as a measure against condensation in electrical device boxes can be summarized as follows. The condensation phenomenon is affected by the surface temperature of an object on which condensation occurs and the absolute humidity in the temperature and humid environment in which the object is disposed. For example, when considering condensation on an inner surface of the electrical device box, if the temperature of the box inner surface is high, condensation does not occur even in a constant humidity environment. However, for example, if the surface temperature decreases below the dew point due to decrease in the surface temperature, condensation does occur. However, if a protective cover of the present invention is used, heat insulation effects of the resin foam constituting the lower part of the protective cover can prevent the decrease in the surface temperature of the inner surface of the electrical device box, and, at the same time, water absorption effect of the nonwoven fabric including the highly water absorbent resin fibers attached to the surface is added with effects due to decrease in thermal resistance of the nonwoven fabric due to an increase in the surface area of the highly water absorbent resin fibers by water absorption. Thus, it is thought that it is possible to expect effects of suppression or prevention of condensation.

As already described, taking into account a radiative cooling in the summer, tests were conducted under somewhat severe conditions, with an outside air temperature of 20°C and temperature and humidity conditions inside the electrical device box of 35°C and 90% RH, with and without the cover member of the present invention. Since the outside air temperature outside the electrical device box is around 20°C, which is higher than the air temperature of approximately 13°C in the duct in the case of the duct, even when the temperature of the electrical device box is slightly cooled down than the outside temperature due to radiative cooling and even if dew condensation of water occurs on the inner surface or the iron plate of the device box, it is thought that dripping of dew condensation water can be significantly reduced due to the heat insulation effect of the resin foam, which is a heat insulating layer of the heat insulation cover member, added with the water retention property effects of the nonwoven fabric including the highly water absorbent resin fibers on the resin foam surface, as well as transpiration effects of the base resin fibers of the nonwoven fabric.

Here, dew condensation water occurrence and dripping confirmation test for the electrical device box was conducted using the test materials with the least SAF mixing ratio similarly to the case of the duct, with the test material 1 as a single-layer product (with a basis weight of 145 g/m$^2$ and a mixing ratio of SAF of 10%) and the test material 6 as a two-layer laminated product (with a basis weight of PET/PE surface layer of 48 g/m$^2$ and a mixing ratio of SAF of 10%). As a result, evaluation results that are equivalent or higher to the test results for the copper pipes shown in Table 2 were obtained. As above, sufficient effects of prevention or suppression of condensation were also confirmed when used as the cover member for the electrical device box.

From the above, it was confirmed that the heat insulation cover member of the present invention can be used as a covering member for an electrical device box by being disposed on an inner wall surface of the electrical device box or, if necessary, on a panel surface.

Here, in the present invention, instead of drip prevention of dew condensation water, drip prevention or drip suppression of dew condensation water has been described. The reason for this is that while it is possible to prevent dew condensation water from dripping in a normal usage environment, it is not known what kind of severe environment will be encountered at an actual construction site. Also, even if the installation environment does not encounter the severe temperature and humidity conditions that were used in the dew condensation water drip prevention test here, various temperature and humidity conditions can be assumed. Furthermore, even if the actual installation environment is not extremely severe, the temperature and humidity conditions fluctuate over time, which creates the problem that it is not always possible to make a perfect comparison with the installation environment at each individual site. Thus, in the present application, based on such considerations, the purpose and problem of the present application have been intentionally described as drip prevention or drip suppression of dew condensation water, rather than drip prevention of dew condensation water. Also, it has been confirmed that, in the sever temperature and humidity environment test using a constant-temperature-and-humidity chamber for the vertical piping using the twin-type piping, the cover member of the present invention including the highly water absorbent resin fibers at the mixing rate of 10% or more and 80% or less has an improvement effect of at least 30% or more in the amount of dew condensation water occurred compared to the conventional example material 1 (a product currently in use: a product in which a polyethylene film is attached to a surface of a resin foam) in the test shown in Table 2, and that the improvement effect of 50% or more is achieved if the mixing ratio of the highly water absorbent resin fibers is 25% or more and 80% or less. From the above, looking at the rest results for the present invention, it is clear that the inventive example materials of the present invention can significantly suppress dew condensation water from dripping compared to the conventional example material and comparison example materials at least in the severe environments, and thus it is also clear that it is possible to achieve either drip prevention or drip suppression of dew condensation water in the actual usage environments.

(DESCRIPTION OF NOTATIONS)

| | |
|---|---|
| 1 | refrigerant pipe |
| 11 | pipe |
| 12 | drain pipe |
| 13 | wiring pipe |
| 2 | resin foam |
| 21 | cell |
| 22, 23 | pipe housing portion |
| 24 | folding portion |
| 25 | elbow covering member (bent joint) |
| 26 | elbow housing portion |
| 27 | resin film |
| 28 | branching portion |
| 3 | nonwoven fabric |
| 31 | first layer of nonwoven fabric |
| 32 | second layer of nonwoven fabric |
| 35 | thermoplastic resin fibers |
| 36 | highly water absorbent resin fibers |
| 5 | heat insulation cover member |
| 6 | cavity, flow path |
| 10, 20, 30, 40 | piping structure |
| 41 | test piece |
| 42 | water droplet migration range |
| 43 | upward moisture ascending amount |
| 44 | downward moisture descending amount |
| 51 | container |
| 52 | water |
| 53 | scale (electronic balance) |
| 62 | release sheet |
| 63 | adhesive layer |
| 65 | joint covering member |
| 66 | joint |
| 67 | metal duct (iron-made duct) |
| 68 | covering member for covering existing conventional pipe cover |
| 69 | gap |
| 70 | duct covering member |
| 71 | indoor unit side piping |
| 72 | outdoor unit side piping |
| 73 | intermediate piping |
| 75 | scale (electronic balance) |
| 76 | conventional pipe cover |
| 77 | tee member housing portion |
| 78 | tee member covering member |
| 80 | electrical device box |
| 81 | electrical device box main body |
| 83 | switch |

| 84 | transformer |
| 85 | ammeter |
| 86 | voltmeter |
| 87 | AC load switch |
| 88 | iron-made plate |
| 89 | opening |
| 100 | water retention property test material |

**Claims**

1. A heat insulation cover member for drip prevention or drip suppression of dew condensation water, the heat insulation cover member comprising:

    a nonwoven fabric that is disposed on a surface of a resin foam, wherein
    the resin foam is a polyethylene-based resin foam having closed cells, and the nonwoven fabric is fixed to one surface of the resin foam by fusion or bonding;
    the nonwoven fabric is formed of a single-layer nonwoven fabric in which thermoplastic resin fibers are mixed with a predetermined amount of highly water absorbent resin fibers, and at least some of the thermoplastic resin fibers are fused or bonded to each other; and
    the nonwoven fabric includes 10% by mass or more and 80% by mass or less of the highly water absorbent resin fibers, and 20% by mass or more and 90% by mass or less of the thermoplastic resin fibers as the remainder.

2. The heat insulation cover member for drip prevention or drip suppression of dew condensation water according to claim 1, wherein

    a fiber diameter of the thermoplastic resin fibers used in the nonwoven fabric is in a range between 5 $\mu$m and 30 $\mu$m;
    a product thickness of the nonwoven fabric is between 0.5 mm and 2.0 mm; and
    a basis weight of the nonwoven fabric is between 30 g/m$^2$ and 300 g/m$^2$.

3. The heat insulation cover member for drip prevention or drip suppression of dew condensation water according to claim 1, wherein

    the thermoplastic resin fibers, which are base resin fibers of the nonwoven fabric, are either mono fibers or core-sheath structure fibers of polyethylene terephthalate, polyethylene, or polypropylene, or fibers in which any of the above fibers are mixed with other fibers;
    at least some of the thermoplastic resin fibers of the nonwoven fabric are fused or bonded to each other; and
    the polyethylene-based resin foam includes a flame retardant.

4. The heat insulation cover member for drip prevention or drip suppression of dew condensation water according to claim 1, wherein

    a water retention parameter of the nonwoven fabric for retaining water against gravity is 0.70 or more, and water retention capacity of the nonwoven fabric determined under predetermined conditions satisfies 7.0 g or more;
    the water retention parameter is a parameter calculated by:

    preparing a strip-shaped test piece having dimensions of 200 mm in length and 25 mm in width, providing a gauge line across a width of a surface of the test piece at the midpoint in a longitudinal direction, and dripping 400 $\mu$L of colored test liquid onto the gauge line while the test piece is held horizontally;
    holding the test piece vertically for five minutes immediately after dripping; and
    dividing an average value in a width direction of ascending distance from the gauge line to a point at which the test liquid reaches upward on the test piece by an average value in the width direction of descending distance from the gauge line to a point at which the test liquid reaches downward on the test piece, which is an index value using the ascending distance from the test piece gauge line and the descending distance from the test piece gauge line;

    and
    the water retention capacity is determined by inserting a refrigerant pipe having a length of 150 mm and a diameter of 25 mm with the heat insulating cover member attached to an outer periphery thereof, into a container containing 20 g of water, and then holding the container in a constant-temperature-and-humidity chamber at a temperature of 23°C and a humidity of 30% for six hours, after which the container is removed and the water is removed, and the water retention capacity is determined from mass after water removal.

5. A heat insulation cover member for drip prevention or drip suppression of dew condensation water, the heat insulation cover member comprising:

a nonwoven fabric that is disposed on a surface of a resin foam, wherein
the resin foam is a polyethylene-based resin foam having closed cells and the nonwoven fabric is fixed to one surface of the resin foam by fusion or bonding;
the nonwoven fabric is a laminate structured nonwoven fabric having a laminate structure of two layers;
a first layer of the nonwoven fabric is formed only of thermoplastic resin fibers, and at least some of the thermoplastic resin fibers are fused or bonded to each other;
a second layer of the nonwoven fabric is formed of a nonwoven fabric in which thermoplastic resin fibers are mixed with a predetermined amount of highly water absorbent resin fibers, and at least some of the thermoplastic resin fibers are fused or bonded to each other;
the nonwoven fabric of the second layer includes, to total mass of the nonwoven fabric forming the second layer, 10% by mass or more and 80% by mass or less of the highly water absorbent resin fibers, and 20% by mass or more and 90% by mass or less of the thermoplastic resin fibers as the remainder; and
either the first layer or the second layer of the nonwoven fabric is joined to the surface of the resin foam.

6. The heat insulation cover member for drip prevention or drip suppression of dew condensation water according to claim 5, wherein

a total thickness of the first layer and the second layer of the nonwoven fabric is between 0.5 mm and 2.0 mm and a total basis weight of the first layer and the second layer is between 30 g/m$^2$ and 300 g/m$^2$;
the thickness and basis weight of the nonwoven fabric of the first layer are smaller than the thickness and basis weight of the nonwoven fabric of the second layer, respectively; and
the fiber diameter of the thermoplastic resin fibers used in the nonwoven fabric of the first layer or the second layer is in a range between 5 μm and 30 μm.

7. The heat insulation cover member for drip prevention or drip suppression of dew condensation water according to claim 5, wherein

the total thickness of the first layer and the second layer of the nonwoven fabric is between 0.5 mm and 2.0 mm and the total basis weight of the first layer and the second layer is between 30 g/m$^2$ and 300 g/m$^2$;
the thickness of the nonwoven fabric of the first layer is between 0.1 mm and 0.5 mm and the basis weight of the first layer is between 5 g/m$^2$ and 50 g/m$^2$, the basis weight of the second layer is between 25 g/m$^2$ and 250 g/m$^2$, and the thickness of the second layer is between 0.4 mm and 1.5 mm;
the thickness and basis weight of the nonwoven fabric of the first layer are smaller than the thickness and basis weight of the nonwoven fabric of the second layer, respectively; and
the fiber diameter of the thermoplastic resin fibers used for the nonwoven fabric of the first layer or the second layer is in a range between 5 μm and 30 μm.

8. The heat insulation cover member for drip prevention or drip suppression of dew condensation water according to claim 5, wherein

the thermoplastic resin fibers, which are base resin fibers of the nonwoven fabric, are either mono fibers or core-sheath structure fibers of polyethylene terephthalate, polyethylene, or polypropylene, or fibers in which any of the above fibers are mixed with other fibers;
at least some of the thermoplastic resin fibers of the nonwoven fabric are fused or bonded to each other; and
the polyethylene-based resin foam includes a flame retardant.

9. The heat insulation cover member for drip prevention or drip suppression of dew condensation water according to claim 5, wherein

a water retention parameter of the nonwoven fabric for retaining water against gravity is 0.70 or more, and water retention capacity of the nonwoven fabric determined under predetermined conditions satisfies 7.0 g or more; the water retention parameter is a parameter calculated by:

preparing a strip-shaped test piece having dimensions of 200 mm in length and 25 mm in width, providing a gauge line across a width of a surface of the test piece at the midpoint in a longitudinal direction, and dripping 400 μL of colored test liquid onto the gauge line while the test piece is held horizontally;

holding the test piece vertically for five minutes immediately after dripping; and

dividing an average value in a width direction of ascending distance from the gauge line to a point at which the test liquid reaches upward on the test piece by an average value in the width direction of descending distance from the gauge line to a point at which the test liquid reaches downward on the test piece, which is an index value using the ascending distance from the test piece gauge line and the descending distance from the test piece gauge line;

and

the water retention capacity is determined by inserting a refrigerant pipe having a length of 150 mm and a diameter of 25 mm with the heat insulating cover member attached to an outer periphery thereof, into a container containing 20 g of water, and then holding the container in a constant-temperature-and-humidity chamber at a temperature of 23°C and a humidity of 30% for six hours, after which the container is removed and the water is removed, and the water retention capacity is determined from mass after water removal.

10. A joint covering member that can be disposed, when piping is covered with the insulation cover member for drip prevention or drip suppression of dew condensation water according to any one of claims 1 to 9, to cover a gap between the first insulation cover member and the second insulation cover member disposed next to the first insulation cover member in a longitudinal direction of the piping, wherein

the joint covering member includes a release paper attached to an adhesive on one surface of a resin foam and a nonwoven fabric attached to the other surface of the resin foam; and

the adhesive layer is attached to an outer periphery of the heat insulation cover member, with the surface of the nonwoven fabric attached to the resin foam as an outer periphery, such that the joint covering member can be used at the joint of the cover members to prevent or suppress dripping of dew condensation water.

11. An elbow covering member for drip prevention or drip suppression of dew condensation water, wherein

the elbow covering member can be obtained by press-molding the heat insulation cover member for drip prevention or drip suppression of dew condensation water according to any one of claims 1 to 9 of a predetermined size so that the elbow covering member has a substantially L-shaped shape after being folded with backs thereof facing each other to cover a 90° bent portion of piping; and

with a surface of a nonwoven fabric attached to a resin foam as an outer surface, the elbow covering member covers an elbow portion of the 90° bent portion or vicinity of a 90° bent portion where the piping is directly bent 90°, thereby preventing or suppressing dripping of dew condensation water.

12. A tee member covering member, wherein

a tee member is a metal-made piping member having a portion branching downward or upward from a portion that corresponds to a straight head portion of a T shape, and, to cover the tee member with the heat insulation cover member for drip prevention or drip suppression of dew condensation water according to any one of claims 1 to 9, the tee member covering member includes a branching portion branching downward or upward with a head portion of a T shape as a folding portion; and

when the folding portion is folded with the folding portion being a hinge starting point for opening, the folding portion and the branching portion surround the entire tee member, thereby forming a tee member covering structure that can prevent or suppress dripping of dew condensation water.

13. A covering member for covering an existing conventional pipe cover using the heat insulation cover member for drip prevention or drip suppression of dew condensation water according to any one of claims 1 to 9, wherein

a cover member, of which surface is attached with a polyethylene film, for covering an existing pipe is wrapped around a heat exchanger pipe substantially cylindrically so that both ends of the cover member face each other at the center; and

the heat insulation cover member is further wrapped to cover an outer surface of the covering member for covering an existing conventional pipe cover with a nonwoven fabric surface being an outer surface so that both ends of the heat insulation cover member face each other, thereby preventing or suppressing dripping of dew condensation water.

14. A duct covering member using the heat insulation cover member for drip prevention or drip suppression of dew condensation water according to any one of claims 1 to 9, wherein
the duct covering member can cover an outer surface of a duct.

15. A piping structure comprising:

at least any one of horizontal piping, diagonal piping, vertical piping, and bent piping in which an outer periphery of a refrigerant pipe is covered with the heat insulation cover member for drip prevention or drip suppression of dew condensation water according to any one of claims 1 to 9, wherein
the refrigerant pipe is covered with each heat insulation cover member for drip prevention or drip suppression of dew condensation water with a surface of the single-layer nonwoven fabric thereof or a surface of either the first layer or second layer of the laminated nonwoven fabric thereof being an outer layer.

16. A piping structure comprising:

at least any one of horizontal piping, diagonal piping, vertical piping, and bent piping in which outer peripheries of two refrigerant pipes are covered respectively with the heat insulation cover members for drip prevention or drip suppression of dew condensation water according to any one of claims 1 to 9, and the heat insulation cover members are heat fused or bonded to each other in a twin-type piping having a figure-eight cross section, wherein
the outer periphery of each refrigerant pipe of the piping structure is covered with each heat insulation cover member for drip prevention or drip suppression of dew condensation water with a surface of the single-layer nonwoven fabric thereof or a surface of either the first layer or second layer of the laminated nonwoven fabric thereof being an outer layer, and the refrigerant pipes are disposed facing each other and the outer surfaces of the nonwoven fabrics are heat fused or bonded so as to integrate the two pipes into the twin-type piping.

17. A piping structure for refrigerant pipes comprising:

at least any one of horizontal piping, diagonal piping, vertical piping, and bent piping, in which one or more refrigerant pipes, a drain pipe and wiring, or a wiring pipe are prepared and housed inside the heat insulation cover member for drip prevention or drip suppression of dew condensation water according to any one of claims 1 to 9, wherein
with a surface of the single-layer nonwoven fabric thereof or a surface of either the first layer or second layer of the laminated nonwoven fabric thereof being an outer layer, the heat insulation cover member encloses the refrigerant pipe, drain pipe, and wiring so that an outer periphery surface of the heat insulation cover member for drip prevention or drip suppression of dew condensation water has a substantially cylindrical cross section and that the refrigerant pipes, drain pipe and wiring, or wiring pipe can be housed inside the heat insulation cover member for drip prevention or drip suppression of dew condensation water, such that components fitted inside the piping are housed in the heat insulation cover member for drip prevention or drip suppression of dew condensation water.

18. A covering structure for heat exchanger ducts using the heat insulation cover member for drip prevention or drip suppression of dew condensation water, wherein
an outer periphery of an entire outer surface of an iron-made heat exchanger duct having a substantially rectangular cross section is covered with the heat insulation cover member for drip prevention or drip suppression of dew condensation water according to any one of claims 1 to 9.

19. A covering structure for an electrical device box, wherein
the heat insulation cover member for drip prevention or drip suppression of dew condensation water according to any one of claims 1 to 9 is disposed on at least any one of inner peripheral surfaces including a ceiling surface, and a back surface or a front surface of a distribution panel excluding an opening of the distribution panel, of an electrical device box, which is for receiving power from an external power source, and distributing or sub-distributing the received power to required equipment.

**20.** A nonwoven fabric to be used for a heat insulation cover member for drip prevention or drip suppression of dew condensation water, the nonwoven fabric comprising:

thermoplastic resin fibers mixed with a predetermined amount of highly water absorbent resin fibers, wherein a water retention parameter of the nonwoven fabric for retaining water against gravity is 0.70 or more, and water retention capacity of the nonwoven fabric determined under predetermined conditions satisfies 7.0 g or more; a product thickness of the nonwoven fabric is between 0.5 mm and 2.0 mm and a basis weight of the nonwoven fabric is between 30 g/m$^2$ and 300 g/m$^2$;

the nonwoven fabric is formed of a nonwoven fabric including the thermoplastic resin fibers, having a fiber diameter in a range between 5 μm and 30 μm, at least some of which are fused or bonded to each other, mixed with the predetermined amount of the highly water absorbent resin fibers;

the nonwoven fabric includes 10% by mass or more and 80% by mass or less of the highly water absorbent resin fibers, and 20% by mass or more and 90% by mass or less of the thermoplastic resin fibers as the remainder;

the water retention parameter is a parameter calculated by:

preparing a strip-shaped test piece having dimensions of 200 mm in length and 25 mm in width, providing a gauge line across a width of a surface of the test piece at the midpoint in a longitudinal direction, and dripping 400 μL of colored test liquid onto the gauge line while the test piece is held horizontally;

holding the test piece vertically for five minutes immediately after dripping; and

dividing an average value in a width direction of ascending distance from the gauge line to a point at which the test liquid reaches upward on the test piece by an average value in the width direction of descending distance from the gauge line to a point at which the test liquid reaches downward on the test piece, which is an index value using the ascending distance from the test piece gauge line and the descending distance from the test piece gauge line;

and

the water retention capacity is determined by inserting a refrigerant pipe having a length of 150 mm and a diameter of 25 mm with the heat insulating cover member attached to an outer periphery thereof, into a container containing 20 g of water, and then holding the container in a constant-temperature-and-humidity chamber at a temperature of 23°C and a humidity of 30% for six hours, after which the container is removed and the water is removed, and the water retention capacity is determined from mass after water removal.

**21.** A nonwoven fabric to be used for a heat insulation cover member for drip prevention or drip suppression of dew condensation water, the nonwoven fabric comprising:

thermoplastic resin fibers mixed with a predetermined amount of highly water absorbent resin fibers, wherein a water retention parameter of the nonwoven fabric for retaining water against gravity is 0.70 or more, and water retention capacity of the nonwoven fabric determined under predetermined conditions satisfies 7.0 g or more;

the nonwoven fabric is a laminate structured nonwoven fabric having a laminate structure of a first layer and second layer of nonwoven fabrics;

a total thickness of the nonwoven fabric is between 0.5 mm and 2.0 mm, a total basis weight of the nonwoven fabric is between 30 g/m$^2$ and 300 g/m$^2$, the thickness of the nonwoven fabric of the first layer is between 0.1 mm and 0.5 mm, and the basis weight of the first layer is between 5 g/m$^2$ and 50 g/m$^2$;

the thickness and basis weight of the nonwoven fabric of the first layer are smaller than the thickness and basis weight of the nonwoven fabric of the second layer, respectively;

the first layer of the nonwoven fabric is formed only of the thermoplastic resin fibers, having a fiber diameter in a range between 5 μm and 30 μm, at least some of which are fused or bonded to one another;

the nonwoven fabric forming the second layer includes, as the base fibers, the same thermoplastic resin fibers as in the first layer;

the second layer of the nonwoven fabric is formed of the nonwoven fabric including the base resin fibers, which is the thermoplastic resin fibers, having a fiber diameter in a range between 5 μm and 30 μm, at least some of which are fused or bonded to one another, mixed with the predetermined amount of the highly water absorbent resin fibers;

the nonwoven fabric forming the second layer includes 10% by mass or more and 80% by mass or less of the highly water absorbent resin fibers to a total mass of the nonwoven fabric of the second layer, and 20% by mass or more and 90% by mass or less of the thermoplastic resin fibers as the remainder;

the water retention parameter is a parameter calculated by:

preparing a strip-shaped test piece having dimensions of 200 mm in length and 25 mm in width, providing a gauge line across a width of a surface of the test piece at the midpoint in a longitudinal direction, and dripping 400 μL of colored test liquid onto the gauge line while the test piece is held horizontally;

holding the test piece vertically for five minutes immediately after dripping; and

dividing an average value in a width direction of ascending distance from the gauge line to a point at which the test liquid reaches upward on the test piece by an average value in the width direction of descending distance from the gauge line to a point at which the test liquid reaches downward on the test piece, which is an index value using the ascending distance from the test piece gauge line and the descending distance from the test piece gauge line;

and

the water retention capacity is determined by inserting a refrigerant pipe having a length of 150 mm and a diameter of 25 mm with the heat insulating cover member attached to an outer periphery thereof, into a container containing 20 g of water, and then holding the container in a constant-temperature-and-humidity chamber at a temperature of 23°C and a humidity of 30% for six hours, after which the container is removed and the water is removed, and the water retention capacity is determined from mass after water removal.

22. The nonwoven fabric to be used for the heat insulation cover member for drip prevention or drip suppression of dew condensation water according to either claim 20 or 21, wherein

the thermoplastic resin fibers are either mono fibers or core-sheath structure fibers of polyethylene, polypropylene, or polyethylene terephthalate, or fibers in which any of the above fibers are mixed with other fibers; and at least some of the thermoplastic resin fibers are fused or bonded to each other.

23. A method for using the laminated structure nonwoven fabric according to claim 20 or claim 21 that is to be joined to a surface of a polyethylene-based resin foam having closed cells and used as a heat insulation cover member for drip prevention or drip suppression of dew condensation water, wherein
with the first layer or the second layer of the laminated structure nonwoven fabric facing outward, the remaining layer of the layer facing outward is fixed to one surface of the resin foam by fusion or bonding so as to join the nonwoven fabric and the resin foam.

24. A method for using the heat insulation cover member for drip prevention or drip suppression of dew condensation water according to any one of claims 1 to 9 for various covering members including a heat exchange pipe covering member, wherein
the heat insulation cover member for drip prevention or drip suppression of dew condensation water is used in a joint covering member used for a gap between the heat insulation cover members, an elbow covering member, a tee member covering member, a covering member for covering an existing conventional pipe cover, a duct covering member, and an electrical device box covering member.

Fig.1A

Fig.1B

Fig.2A

Fig.2B

Fig.3

Fig.4

Fig.5A

Fig.5B

Fig.6

Fig.7

Fig.8A

Fig.8B

Fig.9

Fig.10

Fig.11

Fig.12

Fig.13

Fig.14

Fig.15

Fig.16

Fig.17

## INTERNATIONAL SEARCH REPORT

| International application No. |
| --- |
| **PCT/JP2024/019196** |

### A. CLASSIFICATION OF SUBJECT MATTER

*B32B 5/24*(2006.01)i; *B32B 1/08*(2006.01)i; *B32B 27/32*(2006.01)i; *D04H 1/4382*(2012.01)i; *F16L 9/12*(2006.01)i; *F16L 9/19*(2006.01)i; *F16L 59/14*(2006.01)i; *F24F 13/22*(2006.01)i
FI:   B32B5/24 101; B32B1/08 Z; B32B27/32 Z; D04H1/4382; F16L9/12; F16L9/19 B; F16L59/14; F24F13/22 221

According to International Patent Classification (IPC) or to both national classification and IPC

### B. FIELDS SEARCHED

Minimum documentation searched (classification system followed by classification symbols)
   B32B5/24; B32B1/08; B32B27/32; D04H1/4382; F16L9/12; F16L9/19; F16L59/14; F24F13/22

Documentation searched other than minimum documentation to the extent that such documents are included in the fields searched

   Published examined utility model applications of Japan 1922-1996
   Published unexamined utility model applications of Japan 1971-2024
   Registered utility model specifications of Japan 1996-2024
   Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| Y | JP 8-72183 A (TORAY PEFU KAKOUHIN KK) 19 March 1996 (1996-03-19) <br> claims, paragraphs [0014], [0018], [0022], [0027], [0029] | 1–24 |
| Y | JP 8-28779 A (THE FURUKAWA ELECTRIC CO., LTD.) 02 February 1996 (1996-02-02) <br> claim 1 | 1-24 |
| Y | Microfilm of the specification and drawings annexed to the request of Japanese Utility Model Application No. 57241/1986 (Laid-open No. 170492/1987) (TORAY PEFU KAKOUHIN KK) 29 October 1987 (1987-10-29), claim 1, page 4, line 14 to page 5, line 8, page 6, lines 6-11, page 10, lines 1-3 | 1–24 |
| Y | JP 2022-177784 A (THE FURUKAWA ELECTRIC CO., LTD.) 01 December 2022 (2022-12-01) <br> claims, examples | 1–24 |
| A | JP 2007-277765 A (TEIJIN FIBERS LIMITED) 25 October 2007 (2007-10-25) <br> examples 1-2 | 1–24 |

☑ Further documents are listed in the continuation of Box C.     ☑ See patent family annex.

| | | |
| --- | --- | --- |
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
| --- | --- |
| **13 August 2024** | **20 August 2024** |

| Name and mailing address of the ISA/JP | Authorized officer |
| --- | --- |
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (July 2022)

## INTERNATIONAL SEARCH REPORT

| International application No. |
| --- |
| **PCT/JP2024/019196** |

### C.    DOCUMENTS CONSIDERED TO BE RELEVANT

| Category* | Citation of document, with indication, where appropriate, of the relevant passages | Relevant to claim No. |
| --- | --- | --- |
| A | JP 2004-223869 A (NIPPON FOIL MFG CO., LTD.) 12 August 2004 (2004-08-12) paragraphs [0027], [0039] | 1–24 |
| A | JP 2009-19491 A (NISSHO KOGYO KK) 29 January 2009 (2009-01-29) entire text | 1–24 |

Form PCT/ISA/210 (second sheet) (July 2022)

## INTERNATIONAL SEARCH REPORT
### Information on patent family members

International application No.

**PCT/JP2024/019196**

| Patent document cited in search report | | | Publication date (day/month/year) | Patent family member(s) | Publication date (day/month/year) |
|---|---|---|---|---|---|
| JP | 8-72183 | A | 19 March 1996 | (Family: none) | |
| JP | 8-28779 | A | 02 February 1996 | (Family: none) | |
| JP | 62-170492 | U1 | 29 October 1987 | (Family: none) | |
| JP | 2022-177784 | A | 01 December 2022 | (Family: none) | |
| JP | 2007-277765 | A | 25 October 2007 | (Family: none) | |
| JP | 2004-223869 | A | 12 August 2004 | (Family: none) | |
| JP | 2009-19491 | A | 29 January 2009 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H09049587 A
- JP H09001710 A
- JP H09300511 A
- JP 2000201975 A
- JP H07155594 A